(19) Europäisches Patentamt
European Patent Office
Office européen des brevets

(11) EP 4 575 977 A1

(12) EUROPEAN PATENT APPLICATION

(43) Date of publication:
25.06.2025 Bulletin 2025/26

(21) Application number: 24220689.4

(22) Date of filing: 17.12.2024

(51) International Patent Classification (IPC):
G06T 3/4053 (2024.01)    G06T 7/20 (2017.01)

(52) Cooperative Patent Classification (CPC):
G06T 7/20; G06T 3/4053

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.12.2023 GB 202319652

(71) Applicant: Imagination Technologies Limited
Kings Langley, Hertfordshire WD4 8LZ (GB)

(72) Inventors:
• Imber, James
Kings Langley, WD4 8LZ (GB)
• Chirkunov, Sergei
Kings Langley, WD4 8LZ (GB)
• Heyward, Joseph
Kings Langley, WD4 8LZ (GB)
• Cséfalvay, Szabolcs
Kings Langley, WD4 8LZ (GB)

(74) Representative: Slingsby Partners LLP
1 Kingsway
London WC2B 6AN (GB)

(54) **UPSAMPLING**

(57) A method and processing module are provided for determining one or more pixel values at a respective one or more upsampled pixel locations for a current frame of a sequence of frames. Depth values are obtained for locations of pixels of a reference frame of the sequence of frames. For each of the one or more upsampled pixel locations: (a) a depth value of the current frame is obtained for the upsampled pixel location; (b) a motion vector is obtained for the upsampled pixel location to indicate motion between the reference frame and the current frame for the upsampled pixel location; (c) the motion vector is used for the upsampled pixel location to identify one or more of the pixels of the reference frame; (d) a weight is determined for each of the one or more identified pixels of the reference frame in dependence on: (i) the depth value of the current frame for the upsampled pixel location, and (ii) the depth value for the location of the identified pixel of the reference frame; and (e) the pixel value for the upsampled pixel location is determined using the determined weight for each of the one or more identified pixels.

FIGURE 3

EP 4 575 977 A1

**Description**

CROSS-REFERENCE TO RELATED APPLICATION

This application claims priority from UK patent application 2319652.0 filed on 20 December 2023, which is herein incorporated by reference in its entirety.

TECHNICAL FIELD

The present disclosure is directed to upsampling. For example, upsampling can be applied to input pixels of a current frame of a sequence of frames, e.g. using temporal resampling, to determine one or more pixel values at a respective one or more upsampled pixel locations. The upsampling may be used for super resolution techniques.

BACKGROUND

The term 'super resolution' refers to techniques of upsampling an image that enhance the apparent visual quality of the image, e.g. by estimating the appearance of a higher resolution version of the image. When implementing super resolution, a system will attempt to find a higher resolution version of a lower resolution input image that is maximally plausible and consistent with the lower-resolution input image. Super resolution is a challenging problem because, for every patch in a lower-resolution input image, there is a very large number of potential higher-resolution patches that could correspond to it. In other words, super resolution techniques are trying to solve an ill-posed problem, since although solutions exist, they are not unique.

Super resolution has important applications. It can be used to increase the resolution of an image, thereby increasing the 'quality' of the image as perceived by a viewer. Furthermore, it can be used as a post-processing step in an image generation process, thereby allowing images to be generated at lower resolution (which is often simpler and faster) whilst still resulting in a high quality, high resolution image. An image generation process may be an image capturing process, e.g. using a camera. Alternatively, an image generation process may be an image rendering process in which a computer, e.g. a graphics processing unit (GPU), renders an image of a virtual scene. Compared to using a GPU to render a high resolution image directly, allowing a GPU to render a low resolution image and then applying a super resolution technique to upsample the rendered image to produce a high resolution image has potential to significantly reduce the latency, bandwidth, power consumption, silicon area and/or compute costs of the GPU. GPUs may implement any suitable rendering technique, such as rasterization or ray tracing. For example, a GPU can render a 960x540 image (i.e. an image with 518,400 pixels arranged into 960 columns and 540 rows) which can then be upsampled by a factor of 2 in both horizontal and vertical dimensions (which is referred to as '2x upsampling') to produce a 1920x1080 image (i.e. an image with 2,073,600 pixels arranged into 1920 columns and 1080 rows). In this way, in order to produce the 1920x1080 image, the GPU renders an image with a quarter of the number of pixels. This results in very significant savings (e.g. in terms of latency, power consumption and/or silicon area of the GPU) during rendering and can for example allow a relatively low-performance GPU to render high-quality, high-resolution images within a low power and area budget, provided a suitably efficient and high-quality super-resolution implementation is used to perform the upsampling. In other examples, different upsampling factors (other than 2x) may be applied. A super resolution technique may be applied to a sequence of images (or frames), e.g. a sequence of frames from a video stream rendered by a graphics processing unit.

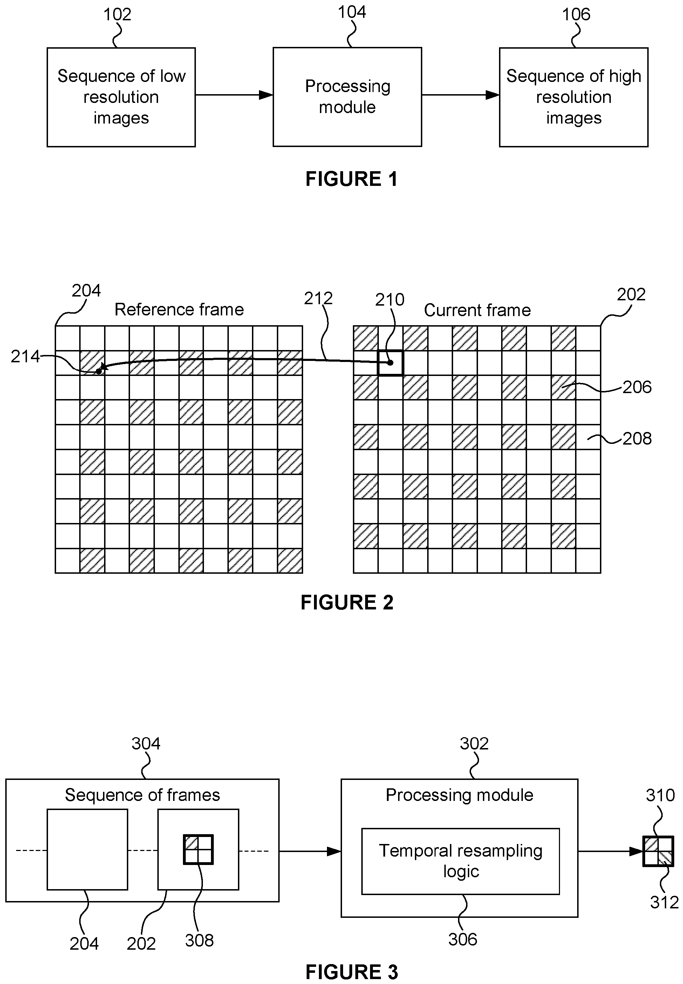

Figure 1 illustrates an upsampling process for applying upsampling to a sequence of frames. A sequence of images 102, which have a relatively low resolution, is processed by a processing module 104 to produce a sequence of images 106 which have a relatively high resolution. In some systems, the processing module 104 may be implemented as a neural network to upsample each of the input images of the sequence of images 102 to produce a respective output image of the sequence of upsampled images 106. Implementing the processing module 104 as a neural network may produce good quality output images, but often requires a high performance computing system (e.g. with large, powerful processing units and memories) to implement the neural network. As such, implementing the processing module 104 as a neural network for performing upsampling of images may be unsuitable for reasons of processing time, latency, bandwidth, power consumption, memory usage, silicon area and compute costs. These considerations of efficiency are particularly important in some devices, e.g. small, battery operated devices with limited compute and bandwidth resources, such as mobile phones and tablets.

In some systems, where a sequence of frames from a video stream is available, higher quality results may be obtained by including samples from multiple input frames when producing each output frame. These methods are called Video Super-Resolution (VSR), and may be implemented using neural networks.

Some systems do not use a neural network for performing super resolution on (sequences of) images, and instead use more conventional processing modules. For example, some systems split the problem of upsampling an image into two stages: (i) upsampling and (ii) adaptive sharpening. In these systems, the upsampling stage can be performed cheaply, e.g. using bilinear upsampling, and the adaptive sharpening stage can be used to sharpen the image, i.e. reduce the blurring introduced by the upsampling. Bilinear upsampling is known in the art and uses linear interpolation of adjacent input pixels in two dimensions to produce output pixels at positions between input pixels.

General aims for systems implementing super resolution are: (i) high quality output images, i.e. for the output images to be maximally plausible given the low resolution input images, (ii) low latency so that output images are generated quickly, (iii) a low cost processing module in terms of resources such as power, bandwidth and silicon area.

SUMMARY

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter.

There is provided a method of determining one or more pixel values at a respective one or more upsampled pixel locations for a current frame of a sequence of frames, the method comprising:

obtaining depth values for locations of pixels of a reference frame of the sequence of frames; and

for each of the one or more upsampled pixel locations:

obtaining a depth value of the current frame for the upsampled pixel location;

obtaining a motion vector for the upsampled pixel location to indicate motion between the reference frame and the current frame for the upsampled pixel location;

using the motion vector for the upsampled pixel location to identify one or more of the pixels of the reference frame;

determining a weight for each of the one or more identified pixels of the reference frame in dependence on: (i) the depth value of the current frame for the upsampled pixel location, and (ii) the depth value for the location of the identified pixel of the reference frame; and

determining the pixel value for the upsampled pixel location using the determined weight for each of the one or more identified pixels.

The method may further comprise obtaining pixel values of the one or more identified pixels of the reference frame of the sequence of frames. Said determining the pixel value for the upsampled pixel location may comprise performing a weighted sum of the pixel values of the one or more identified pixels of the reference frame using the determined weight for each of the one or more identified pixels in the weighted sum.

For each of the one or more upsampled pixel locations, the weight for each of the one or more identified pixels of the reference frame may be determined in dependence on a difference between the depth value of the current frame for the upsampled pixel location and the depth value for the location of the identified pixel of the reference frame.

The weight for each of the one or more identified pixels of the reference frame may be higher if the difference between the depth value of the current frame for the upsampled pixel location and the depth value for the location of the identified pixel of the reference frame is lower. Similarly, the weight for each of the one or more identified pixels of the reference frame may be lower if the difference between the depth value of the current frame for the upsampled pixel location and the depth value for the location of the identified pixel of the reference frame is higher.

The method may further comprise, for each of the one or more upsampled pixel locations:

obtaining a plurality of depth values of the current frame for locations within a region surrounding the upsampled pixel location; and

determining a standard deviation of the depth values of the current frame within the region, wherein the weight for each of the one or more identified pixels of the reference frame is determined further in dependence on: (iii) the determined standard deviation of the depth values.

Said determining a weight for each of the one or more identified pixels of the reference frame may comprise comparing the difference between the depth value of the current frame for the upsampled pixel location and the depth value for the location of the identified pixel of the reference frame with a depth threshold, wherein the depth threshold may be based on the determined standard deviation of the depth values of the current frame within the region.

The weight for an identified pixel of the reference image may be determined to be lower in response to determining that the difference between the depth value of the current frame for the upsampled pixel location and the depth value for the location of the identified pixel of the reference frame is greater than the depth threshold.

The depth threshold may be a hard threshold. The weight, $w_k$, for an identified pixel, $k$, of the reference image may be determined such that $w_k = w_{i,k} \cdot (|D_{ref,k} - D_{curr}| \le T_d)$, where $T_d$ is the depth threshold, where $T_d = F_{depth} \cdot \sigma_{depth}$, and where $w_{i,k}$ is an initial weight for the identified pixel of the reference image, $D_{ref,k}$ is the depth value for the location of the identified pixel of the reference frame, $D_{curr}$ is the depth value of the current frame for the upsampled pixel location, $F_{depth}$ is a predetermined factor, and $\sigma_{depth}$ is the determined standard deviation of the depth values of the current frame within the region surrounding the upsampled pixel location.

The depth threshold may be a soft threshold. The weight, $w_k$, for an identified pixel, $k$, of the reference image may be determined such $w_k = w_{i,k} \cdot e^{-\left(\frac{(D_{ref,k} - D_{curr})}{T_d}\right)^2}$, where $T_d$ is the depth threshold, where $T_d = F_{depth} \cdot \sigma_{depth}$, and where $w_{i,k}$ is an initial weight for the identified pixel of the reference image, $D_{ref,k}$ is the depth value for the location of the identified pixel of the reference frame, $D_{curr}$ is the depth value of the current frame for the upsampled pixel location, $F_{depth}$ is a predetermined factor, and $\sigma_{depth}$ is the determined standard deviation of the depth values of the current frame within the region surrounding the upsampled pixel location.

Said using the motion vector for the upsampled pixel location to identify one or more of the pixels of the reference frame may comprise projecting the upsampled pixel location to a location in the reference frame based on the motion vector and identifying one or more of the pixels of the reference frame in the vicinity of the projected location in the reference frame.

For each of the one or more upsampled pixel locations, said determining a weight for each of the one or more identified pixels of the reference frame may comprise determining an initial weight and using the initial weight to determine the weight for the identified pixel of the reference frame.

The initial weight for each of the one or more identified pixels of the reference frame may be determined by:

determining a distance between the projected location and the location of the identified pixel in the reference frame; and

mapping the distance to an initial weight using a predetermined relationship.

The predetermined relationship may be a Gaussian relationship or a linear relationship.

For each of the one or more upsampled pixel locations, the weight for each of the one or more identified pixels of the reference frame may be determined in dependence on an extent to which the identified pixel of the reference frame is an outlier compared to the other identified pixels of the reference frame.

The method may further comprise, for each of the one or more upsampled pixel locations:

obtaining a plurality of input pixel values of the current frame for locations within a region surrounding the upsampled pixel location; and

determining a mean of the input pixel values of the current frame within the region surrounding the upsampled pixel location.

Said determining the pixel value for the upsampled pixel location may comprise clamping the determined pixel value so that it does not differ from the determined mean of the input pixel values of the current frame within the region surrounding the upsampled pixel location by more than a threshold value.

The method may further comprise, for each of the one or more upsampled pixel locations:

determining a standard deviation of the input pixel values of the current frame within the region surrounding the upsampled pixel location,

wherein the threshold value is based on the determined standard deviation of the input pixel values of the current frame within the region.

For each of the one or more upsampled pixel locations, the threshold value may be $F_{pixel} \cdot \sigma_{pixel}$, where $F_{pixel}$ is a predetermined factor, and $\sigma_{pixel}$ is the determined standard deviation of the input pixel values of the current frame within the region surrounding the upsampled pixel location.

The clamping may be applied selectively to different extents to different regions. The method may further comprise:

comparing an average of pixel values determined at upsampled pixel locations within the region surrounding the upsampled pixel location with the mean of the input pixel values of the current frame within the region surrounding the upsampled pixel location; and

performing the clamping in dependence on a comparison of: (i) a difference between the average of pixel values determined at upsampled pixel locations within the region surrounding the upsampled pixel location and the mean of the input pixel values of the current frame within the region surrounding the upsampled pixel location, and (ii) a threshold difference.

In response to determining that the weights for all of the one or more identified pixels of the reference frame are zero, the pixel value for the upsampled pixel location may be determined to be the determined mean of the input pixel values of the current frame within the region surrounding the upsampled pixel location.

The upsampled pixel locations may be between the locations of diagonally adjacent input pixels of the current frame, such that the upsampled pixel locations and the locations of the input pixels form a repeating quincunx pattern.

The resolution of the pixels of the reference frame may be the same as the resolution of input pixels of the current frame.

A jitter pattern may be used over the sequence of frames, such that different frames of the sequence have pixels at locations corresponding to different upsampled pixel locations.

The resolution of the pixels of the reference frame may be the same as the resolution of the pixels determined at the upsampled pixel locations.

The pixel values and the depth values of the current frame and of the reference frame at input pixel locations may be determined by a graphics rendering process.

Said obtaining a depth value of the current frame for the upsampled pixel location may comprise:

receiving depth values of the current frame at locations of input pixels surrounding the upsampled pixel location;

for each pair of input pixels of said input pixels for which depth values are received, determining an interpolated depth value for the upsampled pixel location based on the depth values for the pair of input pixels;

determining depth weights for said pairs of input pixels based on depth gradients between the depth values for the pairs of input pixels; and

determining the depth value of the current frame for the upsampled pixel location by performing a weighted sum of the determined interpolated depth values using the determined depth weights for the pairs of input pixels.

Said determining depth weights for said pairs of input pixels may comprise:

multiplying the depth gradients for the pairs of input pixels by a negative number; and

inputting the results of the multiplications into a softmax function.

The pixel values may be Y channel pixel values.

There is provided a processing module configured to determine one or more pixel values at a respective one or more upsampled pixel locations for a current frame of a sequence of frames, the processing module being configured to:

obtain depth values for locations of pixels of a reference frame of the sequence of frames; and

for each of the one or more upsampled pixel locations:

obtain a depth value of the current frame for the upsampled pixel location;

obtain a motion vector for the upsampled pixel location to indicate motion between the reference frame and the current frame for the upsampled pixel location;

use the motion vector for the upsampled pixel location to identify one or more of the pixels of the reference frame;

determine a weight for each of the one or more identified pixels of the reference frame in dependence on: (i) the depth value of the current frame for the upsampled pixel location, and (ii) the depth value for the location of the identified pixel of the reference frame; and

determine the pixel value for the upsampled pixel location using the determined weight for each of the one or more identified pixels.

There may be provided a processing module configured to perform any of the methods described herein.

The processing module may be embodied in hardware on an integrated circuit.

There may be provided computer readable code configured to cause any of the methods described herein to be performed when the code is run.

There may be provided an integrated circuit definition dataset that, when processed in an integrated circuit manufacturing system, configures the integrated circuit manufacturing system to manufacture a processing module as described herein.

There may be provided a method of determining one or more pixel values at a respective one or more upsampled pixel locations for a current frame of a sequence of frames, the method comprising:

obtaining pixel values of pixels of a reference frame of the sequence of frames;

for each of the one or more upsampled pixel locations:

obtaining a plurality of input pixel values of the current frame for locations within a region surrounding the upsampled pixel location;

determining a mean of the input pixel values of the current frame within the region surrounding the upsampled pixel location;

obtaining a motion vector for the upsampled pixel location to indicate motion between the reference frame and the current frame for the upsampled pixel location;

using the motion vector for the upsampled pixel location to identify one or more of the pixels of the reference frame; and

combining the pixel values of the one or more identified pixels of the reference frame to determine a pixel value for the upsampled pixel location;

wherein said combining the pixel values of the one or more identified pixels of the reference frame to determine a pixel value for the upsampled pixel location comprises clamping the determined pixel value so that it does not differ from the determined mean of the input pixel values of the current frame within the region surrounding the upsampled pixel location by more than a threshold value.

The method may further comprise, for each of the one or more upsampled pixel locations:

determining a standard deviation of the input pixel values of the current frame within the region surrounding the upsampled pixel location,

wherein the threshold value is based on the determined standard deviation of the input pixel values of the current frame within the region.

For each of the one or more upsampled pixel locations, the threshold value may be $F_{pixel} \cdot \sigma_{pixel}$, where $F_{pixel}$ is a predetermined factor, and $\sigma_{pixel}$ is the determined standard deviation of the input pixel values of the current frame within the region surrounding the upsampled pixel location.

The clamping may be applied selectively to different extents to different regions.

The method may further comprise:

comparing an average of pixel values determined at upsampled pixel locations within the region surrounding the upsampled pixel location with the mean of the input pixel values of the current frame within the region surrounding the upsampled pixel location; and

performing the clamping in dependence on a comparison of: (i) a difference between the average of pixel values determined at upsampled pixel locations within the region surrounding the upsampled pixel location and the mean of the input pixel values of the current frame within the region surrounding the upsampled pixel location, and (ii) a threshold difference.

The pixel values may be Y channel pixel values.

For each of the one or more upsampled pixel locations, said combining the pixel values of the one or more identified pixels of the reference frame may comprise:

determining a weight for each of the one or more identified pixels of the reference frame; and

determining the pixel value for the upsampled pixel location using the determined weight for each of the one or more identified pixels.

Said determining the pixel value for the upsampled pixel location may comprise performing a weighted sum of the pixel values of the one or more identified pixels of the reference frame using the determined weight for each of the one or more identified pixels in the weighted sum.

The method may further comprise, for each of the one or more upsampled pixel locations:

obtaining depth values for the locations of the one or more identified pixels of the reference frame; and

obtaining a depth value of the current frame for the upsampled pixel location,

wherein the weight for each of the one or more identified pixels of the reference frame is determined in dependence on: (i) the depth value of the current frame for the upsampled pixel location, and (ii) the depth value for the location of the identified pixel of the reference frame.

For each of the one or more upsampled pixel locations, the weight for each of the one or more identified pixels of the reference frame may be determined in dependence on a difference between the depth value of the current frame for the upsampled pixel location and the depth value for the location of the identified pixel of the reference frame.

The method may further comprise, for each of the one or more upsampled pixel locations:

obtaining a plurality of depth values of the current frame for locations within a region surrounding the upsampled pixel location; and

determining a standard deviation of the depth values of the current frame within the region, wherein the weight for each of the identified pixels of the reference frame is determined further in dependence on: (iii) the determined standard deviation of the depth values.

Said determining a weight for each of the one or more identified pixels of the reference frame may comprise comparing the difference between the depth value of the current frame for the upsampled pixel location and the depth value for the location of the identified pixel of the reference frame with a depth threshold, wherein the depth threshold is based on the determined standard deviation of the depth values of the current frame within the region.

The weight for an identified pixel of the reference image may be determined to be lower in response to determining that the difference between the depth value of the current frame for the upsampled pixel location and the depth value for the location of the identified pixel of the reference frame is greater than the depth threshold.

The depth threshold may be a hard threshold. The weight, $w_k$, for an identified pixel, $k$, of the reference image may be determined such that $w_k = w_{i,k} \cdot (|D_{ref,k} - D_{curr}| \leq T_d)$, where $T_d$ is the depth threshold, where $T_d = F_{depth} \cdot \sigma_{depth}$, and where $w_{i,k}$ is an initial weight for the identified pixel of the reference image, $D_{ref,k}$ is the depth value for the location of the identified pixel of the reference frame, $D_{curr}$ is the depth value of the current frame for the upsampled pixel location, $F_{depth}$ is a predetermined factor, and $\sigma_{depth}$ is the determined standard deviation of the depth values of the current frame within the region surrounding the upsampled pixel location.

The depth threshold may be a soft threshold. The weight, $w_k$, for an identified pixel, $k$, of the reference image may be determined such $w_k = w_{i,k} \cdot e^{-\left(\frac{(D_{ref,k}-D_{curr})}{T_d}\right)^2}$, where $T_d$ is the depth threshold, where $T_d = F_{depth} \cdot \sigma_{depth}$, and where $w_{i,k}$ is an initial weight for the identified pixel of the reference image, $D_{ref,k}$ is the depth value for the location of the identified pixel of the reference frame, $D_{curr}$ is the depth value of the current frame for the upsampled pixel location, $F_{depth}$ is a predetermined factor, and $\sigma_{depth}$ is the determined standard deviation of the depth values of the current frame within the region surrounding the upsampled pixel location.

Said obtaining a depth value of the current frame for the upsampled pixel location may comprise:

receiving depth values of the current frame at locations of input pixels surrounding the upsampled pixel location;

for each pair of input pixels of said input pixels for which depth values are received, determining an interpolated depth value for the upsampled pixel location based on the depth values for the pair of input pixels;

determining depth weights for said pairs of input pixels based on depth gradients between the depth values for the pairs of input pixels; and

determining the depth value of the current frame for the upsampled pixel location by performing a weighted sum of the determined interpolated depth values using the determined depth weights for the pairs of input pixels.

Said determining depth weights for said pairs of input pixels may comprise:

multiplying the depth gradients for the pairs of input pixels by a negative number; and

inputting the results of the multiplications into a softmax function.

In response to determining that the weights for all of the identified pixels of the reference frame are zero, the pixel value for the upsampled pixel location may be determined to be the determined mean of the input pixel values of the current frame within the region surrounding the upsampled pixel location.

For each of the one or more upsampled pixel locations, the weight for each of the one or more identified pixels of the reference frame may be determined in dependence on an extent to which the identified pixel of the reference frame is an outlier compared to the other identified pixels of the reference frame.

Said using the motion vector for the upsampled pixel location to identify one or more of the pixels of the reference frame may comprise projecting the upsampled pixel location to a location in the reference frame based on the motion vector and identifying one or more of the pixels of the reference frame in the vicinity of the projected location in the reference frame.

For each of the one or more upsampled pixel locations, said determining a weight for each of the one or more identified pixels of the reference frame may comprise:

determining an initial weight by: (i) determining a distance between the projected location and the location of the identified pixel in the reference frame, and (ii) mapping the distance to an initial weight using a predetermined relationship; and

using the initial weight to determine the weight for the identified pixel of the reference frame.

The predetermined relationship may be a Gaussian relationship or a linear relationship.

The upsampled pixel locations may be between the locations of diagonally adjacent input pixels of the current frame, such that the upsampled pixel locations and the locations of the input pixels form a repeating quincunx pattern.

The resolution of the pixels of the reference frame may be the same as the resolution of input pixels of the current frame.

A jitter pattern may be used over the sequence of frames, such that different frames of the sequence have pixels at locations corresponding to different upsampled pixel locations.

The resolution of the pixels of the reference frame may be the same as the resolution of the pixels determined at the upsampled pixel locations.

There may be provided a processing module configured to determine one or more pixel values at a respective one or more upsampled pixel locations for a current frame of a sequence of frames, the processing module being configured to:

obtain pixel values of pixels of a reference frame of the sequence of frames;

for each of the one or more upsampled pixel locations:

obtain a plurality of input pixel values of the current frame for locations within a region surrounding the upsampled pixel location;

determine a mean of the input pixel values of the current frame within the region surrounding the upsampled pixel location;

obtain a motion vector for the upsampled pixel location to indicate motion between the reference frame and the current frame for the upsampled pixel location;

use the motion vector for the upsampled pixel location to identify one or more of the pixels of the reference frame; and

combine the pixel values of the one or more identified pixels of the reference frame to determine a pixel value for the upsampled pixel location;

wherein combining the pixel values of the one or more identified pixels of the reference frame to determine a pixel value for the upsampled pixel location comprises clamping the determined pixel value so that it does not differ from the determined mean of the input pixel values of the current frame within the region surrounding the upsampled pixel location by more than a threshold value.

There may be provided a processing module configured to perform any of the methods described herein.

The processing module may be embodied in hardware on an integrated circuit.

There may be provided computer readable code configured to cause any of the methods described herein to be performed when the code is run.

There may be provided an integrated circuit definition dataset that, when processed in an integrated circuit manufacturing system, configures the integrated circuit manufacturing system to manufacture a processing module as described herein.

There may be provided a method of determining pixel values at upsampled pixel locations for a current frame of a sequence of frames, the method comprising:

determining pixel values at a first subset of the upsampled pixel locations for the current frame using a graphics rendering process;

determining pixel values at a second subset of the upsampled pixel locations for the current frame by applying temporal resampling to pixel values of pixels of a reference frame of the sequence of frames; and

determining pixel values at a third subset of the upsampled pixel locations for the current frame by applying spatial upsampling to the determined pixel values at the upsampled pixel locations of the first and second subsets.

The upsampled pixel locations of the first and second subsets may form a repeating quincunx pattern.

The upsampled pixel locations of the second subset may be between diagonally adjacent upsampled pixel locations of the first subset, such that:

for each of the upsampled pixel locations of the first subset which are not on the edge of the current frame the nearest four upsampled pixel locations of the repeating quincunx pattern are upsampled pixel locations of the second subset, and

for each of the upsampled pixel locations of the second subset which are not on the edge of the current frame the nearest four upsampled pixel locations of the repeating quincunx pattern are upsampled pixel locations of the first subset.

The upsampled pixel locations of the third subset may be in the gaps of the repeating quincunx pattern.

Each of the upsampled pixel locations of the third subset which are not on the edge of the current frame may be either: (i) between two horizontally adjacent upsampled pixel locations of the first subset and between two vertically adjacent upsampled pixel locations of the second subset, or (ii) between two vertically adjacent upsampled pixel locations of the first subset and between two horizontally adjacent upsampled pixel locations of the second subset.

The first, second and third subsets of upsampled pixel locations may be distinct, such that there are no upsampled pixel locations that belong to more than one of the first, second and third subsets.

All of the upsampled pixel locations for the current frame may belong to one of the first, second and third subsets.

It may be the case that: a quarter of the upsampled pixel locations for the current frame are in the first subset, a quarter of the upsampled pixel locations for the current frame are in the second subset, and half of the upsampled pixel locations for the current frame are in the third subset.

A jitter pattern may be used over the sequence of frames such that pixel values may be determined using a graphics rendering process at different upsampled pixel locations for different frames of the sequence of frames.

The subset of upsampled pixel locations for which pixel values are determined using a graphics rendering process may alternate for successive frames of the sequence of frames between being the first subset of upsampled pixel locations and being the second subset of upsampled pixel locations.

The reference frame may be a previous frame or a later frame relative to the current frame in the sequence of frames.

Said graphics rendering process may be a rasterisation process or a ray tracing process.

Said determining pixel values at a second subset of the upsampled pixel locations for the current frame by applying temporal resampling to pixel values of pixels of a reference frame of the sequence of frames may comprise:

obtaining the pixel values of pixels of the reference frame;

for each of the upsampled pixel locations of the second subset:

obtaining a motion vector for the upsampled pixel location to indicate motion between the reference frame and the current frame for the upsampled pixel location;

using the motion vector for the upsampled pixel location to identify one or more of the pixels of the reference frame; and

combining the pixel values of the one or more identified pixels of the reference frame to determine a pixel value for the upsampled pixel location of the second subset.

Said determining pixel values at a second subset of the upsampled pixel locations for the current frame by applying temporal resampling to pixel values of pixels of a reference frame of the sequence of frames may further comprise:

obtaining depth values for the locations of the pixels of the reference frame; and

for each of the upsampled pixel locations of the second subset, obtaining a depth value of the current frame for the upsampled pixel location;

wherein, for each of the upsampled pixel locations of the second subset, said combining the pixel values of the one or more identified pixels of the reference frame may comprise:

determining a weight for each of the one or more identified pixels of the reference frame in dependence on: (i) the depth value of the current frame for the upsampled pixel location, and (ii) the depth value for the location of the identified pixel of the reference frame; and

determining the pixel value for the upsampled pixel location using the determined weight for each of the identified pixels.

Said determining the pixel value for the upsampled pixel location may comprise performing a weighted sum of the pixel values of the one or more identified pixels of the reference frame using the determined weight for each of the one or more identified pixels in the weighted sum.

The method may further comprise, for each of the one or more upsampled pixel locations of the second subset:

obtaining a plurality of depth values of the current frame for locations within a region surrounding the upsampled pixel location; and

determining a standard deviation of the depth values of the current frame within the region, wherein the weight for each of the identified pixels of the reference frame is determined further in dependence on: (iii) the determined standard deviation of the depth values.

Said using the motion vector for the upsampled pixel location to identify one or more of the pixels of the reference frame may comprise projecting the upsampled pixel location to a location in the reference frame based on the motion vector and identifying one or more of the pixels of the reference frame in the vicinity of the projected location in the reference frame.

Said determining pixel values at a second subset of the upsampled pixel locations for the current frame by applying temporal resampling to pixel values of pixels of a reference frame of the sequence of frames further may comprise, for each of the one or more upsampled pixel locations of the second subset:

determining a mean of a plurality of the pixel values at the first subset of upsampled pixel locations for the current frame within a region surrounding the upsampled pixel location,

wherein said combining the pixel values of the one or more identified pixels of the reference frame to determine a pixel value for the upsampled pixel location of the second subset may comprise clamping the determined pixel value so that it does not differ from the determined mean of the pixel values at the first subset of upsampled pixel locations for the current frame within the region surrounding the upsampled pixel location by more than a threshold value.

Said determining pixel values at a second subset of the upsampled pixel locations for the current frame by applying temporal resampling to pixel values of pixels of a reference frame of the sequence of frames may further comprise, for each of the one or more upsampled pixel locations of the second subset:

determining a standard deviation of the plurality of the pixel values at the first subset of upsampled pixel locations for the current frame within the region surrounding the upsampled pixel location,

wherein the threshold value is based on the determined standard deviation of the pixel values at the first subset of upsampled pixel locations for the current frame within the region.

Said determining pixel values at a third subset of the upsampled pixel locations for the current frame by applying spatial upsampling to the determined pixel values at the upsampled pixel locations of the first and second subsets may comprise performing bilinear interpolation on determined pixel values at the upsampled pixel locations of the first and second subsets.

Said determining pixel values at a third subset of the upsampled pixel locations for the current frame by applying spatial upsampling to the determined pixel values at the upsampled pixel locations of the first and second subsets may comprise:

analysing the pixel values at the upsampled pixel locations of the first and second subsets to determine one or more weighting parameters, the one or more weighting parameters being indicative of a directionality of filtering to be applied when upsampling is applied to the determined pixel values at the upsampled pixel locations of the first and second subsets; and

determining the pixel values at the third subset of the upsampled pixel locations by applying one or more kernels to at least some of the pixel values at the upsampled pixel locations of the first and second subsets in accordance with the determined one or more weighting parameters.

Said analysing the pixel values at the upsampled pixel locations of the first and second subsets to determine one or more weighting parameters may comprise processing the pixel values at the upsampled pixel locations of the first and second subsets with an implementation of a neural network, wherein the neural network has been trained to output an indication of the one or more weighting parameters to be indicative of a directionality of filtering to be applied when upsampling is applied to the determined pixel values at the upsampled pixel locations of the first and second subsets.

The pixel values at the third subset of the upsampled pixel locations may be non-sharpened upsampled pixel values.

The pixel values at the third subset of the upsampled pixel locations may be sharpened upsampled pixel values.

The pixel values may be Y channel pixel values.

There may be provided a processing system configured to determine pixel values at upsampled pixel locations for a current frame of a sequence of frames, the processing system comprising:

a graphics rendering unit configured to determine pixel values at a first subset of the upsampled pixel locations for the current frame using a graphics rendering process;

temporal resampling logic configured to determine pixel values at a second subset of the upsampled pixel locations for the current frame by applying temporal resampling to pixel values of pixels of a reference frame of the sequence of frames; and

spatial upsampling logic configured to determine pixel values at a third subset of the upsampled pixel locations for the current frame by applying spatial upsampling to the determined pixel values at the upsampled pixel locations of the first and second subsets.

The processing system may comprise a first device and a second device which are arranged to communicate with each other over a network,

wherein the graphics rendering unit and the temporal resampling logic may be implemented at the first device, and

wherein the spatial upsampling logic may be implemented at the second device.

There may be provided a processing system configured to perform any of the methods described herein.

The processing system may be embodied in hardware on one or more integrated circuits.

There may be provided computer readable code configured to cause any of the methods described herein to be performed when the code is run.

There may be provided an integrated circuit definition dataset that, when processed in an integrated circuit manufacturing system, configures the integrated circuit manufacturing system to manufacture a processing system described herein.

The processing modules or processing systems described herein may be embodied in hardware on an integrated circuit. There may be provided a method of manufacturing, at an integrated circuit manufacturing system, a processing module or a processing system. There may be provided an integrated circuit definition dataset that, when processed in an integrated circuit manufacturing system, configures the system to manufacture a processing module or a processing system. There may be provided a non-transitory computer readable storage medium having stored thereon a computer readable description of a processing module or a processing system that, when processed in an integrated circuit manufacturing system, causes the integrated circuit manufacturing system to manufacture an integrated circuit embodying a processing module or a processing system.

There may be provided an integrated circuit manufacturing system comprising: a non-transitory computer readable storage medium having stored thereon a computer readable description of the processing module; a layout processing system configured to process the computer readable description so as to generate a circuit layout description of an integrated circuit embodying the processing module of the processing system; and an integrated circuit generation system configured to manufacture the processing module or processing system according to the circuit layout description.

There may be provided computer program code for performing any of the methods described herein. There may be provided non-transitory computer readable storage medium having stored thereon computer readable instructions that, when executed at a computer system, cause the computer system to perform any of the methods described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

Figure 1 illustrates an upsampling process;

Figure 2 shows input pixels of a current frame and input pixels of a reference frame within a sequence of frames;

Figure 3 shows a processing module configured to determine one or more pixel values at a respective one or more upsampled pixel locations for a current frame of a sequence of frames;

Figure 4 is a flow chart for a method of determining one or more pixel values at a respective one or more upsampled pixel locations for a current frame of a sequence of frames;

Figure 5 illustrates upsampled pixel locations of the current frame, indicating the upsampled pixel locations for which pixel values and/or depth values are obtained;

Figure 6 illustrates projecting an upsampled pixel location of the current frame to a location in a reference frame;

Figure 7 shows a graph illustrating a linear relationship and a Gaussian relationship for mapping distances between the projected location and the locations of the pixels in the reference frame to initial weights for use in determining the pixel value for the upsampled pixel location;

Figure 8 shows a graph illustrating clamping of the determined pixel values;

Figure 9 shows three versions of a portion of an upsampled frame: (i) a ground truth version, (ii) a version in which history rectification has been applied to the determined pixel values, and (iii) a version in which history rectification has not been applied to the determined pixel values;

Figure 10 illustrates a vicinity of reference pixels within the reference frame;

Figure 11A illustrates an example method for determining a depth value for an upsampled pixel location;

Figure 11B is a flow chart of method steps for determining a depth value for an upsampled pixel location in accordance with the example shown in Figure 10;

Figure 12 illustrates a processing system for determining pixel values at upsampled pixel locations as described herein;

Figure 13 is a flow chart for a method of determining pixel values at upsampled pixel locations for a current frame of a sequence of frames;

Figure 14 illustrates temporal resampling and spatial upsampling being applied to frames of a sequence of frames in accordance with the method shown in the flow chart of Figure 13;

Figure 15 shows spatial upsampling logic configured to upsample pixel values to determine a block of upsampled pixel values;

Figure 16 is a flow chart for a method of applying upsampling to pixel values at upsampled pixel locations of first and second subsets;

Figure 17 is a flow chart of method steps for determining an upsampled pixel value;

Figure 18 shows a portion of the pixel values of the first and second subsets to which spatial upsampling is to be applied;

Figure 19a shows a first kernel for applying a first weighting parameter;

Figure 19b shows a second kernel for applying a second weighting parameter;

Figure 20 illustrates pixel values of a sequence of frames indicating how upsampled pixel locations can be projected to locations in reference frames according to an example implementing a Finite Impulse Response (FIR) approach;

Figure 21 illustrates pixel values of a sequence of frames indicating how upsampled pixel locations can be projected to locations in a reference frame according to an example implementing an Infinite Impulse Response (IIR) approach;

Figure 22 shows a computer system in which a processing module and/or a processing system is implemented; and

Figure 23 shows an integrated circuit manufacturing system for generating an integrated circuit embodying a processing module and/or a processing system.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art.

Embodiments will now be described by way of example only. In examples described herein pixel values can be determined at upsampled pixel locations for a current frame of a sequence of frames using a temporal resampling approach. The sequence of frames comprises frames at respective time instances, e.g. the sequence of frames includes the current frame at a current time instance and one or more reference frames each at a respective reference time instance. Temporal resampling can be applied to pixel values of pixels of a reference frame of the sequence of frames to determine pixel values at upsampled pixel locations for the current frame. The "reference frame" may be a previous frame or a later frame relative to the current frame in the sequence of frames. In many of the examples described herein, the reference frame is the frame immediately preceding the current frame in the sequence of frames. In some examples there may be a single reference frame, whereas in other examples there may be multiple reference frames.

Figure 2 shows input pixels of a current frame 202 and input pixels of a reference frame 204 (e.g. a previous frame) within a sequence of frames. The (low resolution) input pixels are shown with diagonal hatching in Figure 2, e.g. at upsampled pixel location 206. The squares in Figure 2 which are shown without hatching represent upsampled pixel locations (e.g. upsampled pixel location 208) for which pixel values are to be determined, i.e. upsampled pixel locations for which input pixels are not provided. An "upsampled pixel location" is a pixel location in the upsampled output image in the sequence of output frames. It can be seen in the example shown in Figure 2 that the upsampling will double the resolution, i.e. the number of rows of pixels will be doubled and the number of columns of pixels will be doubled, such that each 2x2 block of upsampled pixel locations comprises the location of one input pixel in the current frame 202. Figure 2 shows an example in which a jitter pattern is used over the sequence of frames, such that the current frame and the reference frame have pixels at locations corresponding to different upsampled pixel locations. In particular, the current frame 202 has an input pixel (shown with diagonal hatching) in the top left upsampled pixel location and then in alternate rows and alternate columns from the top left location; whereas the reference frame 204 has an input pixel (shown with diagonal hatching) at an upsampled pixel location in the second-to-top row and in the second-from-left column and then in alternate rows and alternate columns from that location. In this way the upsampled pixel locations for which consecutive frames of the sequence have input pixels are shifted relative to each other. For example, the jitter pattern may alternate, i.e. the locations of shaded pixels in 202 and 204 may switch from one frame to the next. Often, the content represented by frames of a sequence of frames (e.g. a video stream) does not change significantly from one frame to the next. For example, the pixel value of the current frame 202 at the upsampled pixel location 210 is likely to be similar to the input pixel value of the reference frame 204 at the corresponding location (i.e. in the second-to-top row and in the second-to-leftmost column), which is a location for which an input pixel is included in the reference frame 204. This may, for example, be the case where the camera and much of the scene are static. As described in more detail below, a motion vector 212 can be used to project the upsampled pixel location 210 from the current frame 202 to a projected location 214 in the reference frame 204. In this example, the motion vector has near-zero displacement relative to the location 210 both horizontally and vertically. The pixel values of the reference frame can be used to estimate a pixel value at the upsampled pixel location 210, e.g. in accordance with the projected location 214. This estimation process is "temporal resampling", and examples for performing temporal resampling are described herein.

In general, there may be a single reference frame or there may be multiple reference frames, and each reference frame may be a previous frame or a later frame relative to the current frame in the sequence of frames.

Figure 3 shows a processing module 302 configured to apply temporal resampling of a reference frame to obtain pixel values at upsampled pixel locations in a current frame of a sequence of frames 304. The sequence of frames 304 includes the current frame 202 and the reference frame 204. As described above, in the example shown in Figure 3 the reference frame 204 is the frame immediately preceding the current frame 202 in the sequence of frames 304, but in other examples the reference frame could be a different frame, either before or after the current frame in the sequence of frames. The processing module 302 comprises temporal resampling logic 306 configured to perform the temporal resampling described herein. The temporal resampling logic 306 may be implemented in software, hardware or a combination thereof.

The format of the pixels could be different in different examples. For example, the pixels could be in YUV format (in which each pixel has a value in each of Y, U and V channels, where Y represents luma values and U and V represent chroma values), and upsampling may be applied to each of the Y, U and V channels separately. The upsampling described herein may be applied to just the Y channel (i.e. the pixel values may be Y channel pixel values) with the upsampling of the U and V channels being performed in a simpler manner, e.g. using bilinear interpolation. In other examples, the upsampling described herein may be applied to each of the Y, U and V channels. The human visual system is not as perceptive to spatial resolution in the U and V channels as in the Y channel, so it may be beneficial (e.g. lower power and area cost in a hardware implementation) to use a simpler upsampling technique (e.g. bilinear upsampling on the current frame only) for the U and V channels, whilst the more complex upsampling techniques described herein (which can provide upsampled images with less blurring and/or other artefacts) may be used for the Y channel. The temporal resampling methods described herein may therefore be applied to the Y channel only, relying on the current frame to furnish the U and V channels, which may increase robustness to chroma errors and reduce implementation cost (for example, reduced bandwidth and execution time in a software implementation of temporal resampling of a GPU), In other examples, the same temporal resampling technique may be applied to all three channels. If the input pixel data is in RGB format then it could be converted into YUV format (e.g. using a known colour space conversion technique) and then processed as data in Y, U and V channels. Alternatively, if the input pixel data is in RGB format (in which each pixel has a value in each of R, G and B channels corresponding to red, green, and blue respectively) then the techniques described herein could be implemented on the R, G and B channels as described herein, wherein the G channel may be considered to be a proxy for the Y channel. If the input data includes an alpha channel then upsampling (e.g. using bilinear interpolation) may be applied to the alpha channel separately.

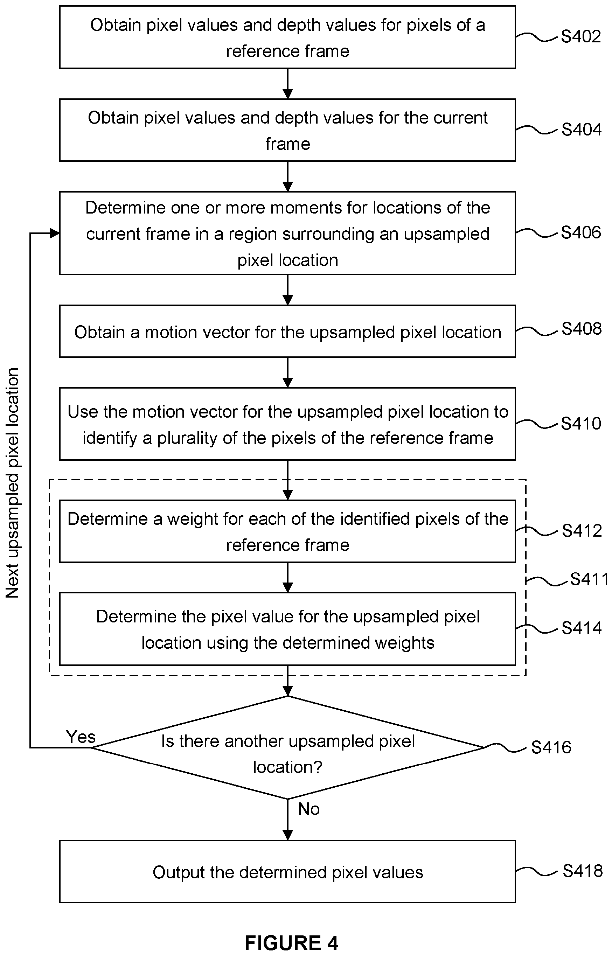

Figure 4 is a flow chart for a method of determining one or more pixel values at a respective one or more upsampled pixel locations for a current frame of a sequence of frames. The method shown in Figure 4 implements temporal resampling. That is, the method applies temporal resampling of one or more reference frames to determine one or more pixel values corresponding to the current time instance at a respective one or more upsampled pixel locations.

In step S402 the temporal resampling logic 306 obtains pixel values and depth values of pixels of the reference frame 204. In step S404 the temporal resampling logic 306 obtains pixel values and depth values for the current frame 202. For example, the pixel values and the depth values of the current frame 202 and of the reference frame 204 may be determined by a graphics rendering process. The graphics rendering process could be any suitable known type of graphics rendering process, e.g. a rasterisation process or a ray tracing process. It is noted that steps S402 and S404 may be performed in either order or simultaneously.

A pixel value and a depth value are obtained in step S402 for each pixel of the reference frame 204 (shown with diagonal hatching in Figure 2). Similarly, a pixel value and a depth value are obtained in step S404 for each pixel of the current frame 202 (shown with diagonal hatching in Figure 2). In addition, a depth value is obtained in step S404 for each upsampled pixel location for which a pixel value is to be determined. For example, pixel values may be determined at upsampled pixel locations which are between diagonally adjacent input pixels of the current frame 202. In this way, the input pixels and the determined pixel values are at locations which form a repeating quincunx (or "chequer board") pattern. The pixel values at the upsampled pixel locations which are determined by temporal resampling may be referred to as 'temporally resampled pixel values'. Furthermore, the upsampled pixel locations' may be referred to as 'temporally resampled pixel locations'. One of these upsampled pixel locations is denoted with reference 210 in Figure 2. Figure 3 shows that for a 2x2 block of upsampled pixel locations 308, the current frame 202 has one pixel value, in the top left of the 2x2 block 308 in the example shown in Figure 3, and the processing module 302 outputs a block of pixel values 310 which includes a temporally resampled pixel value 312 for the bottom right upsampled pixel location. A depth value for a pixel represents a distance from a viewpoint (or "camera centre") for the frame to a visible surface in the scene represented by the pixel in the frame.

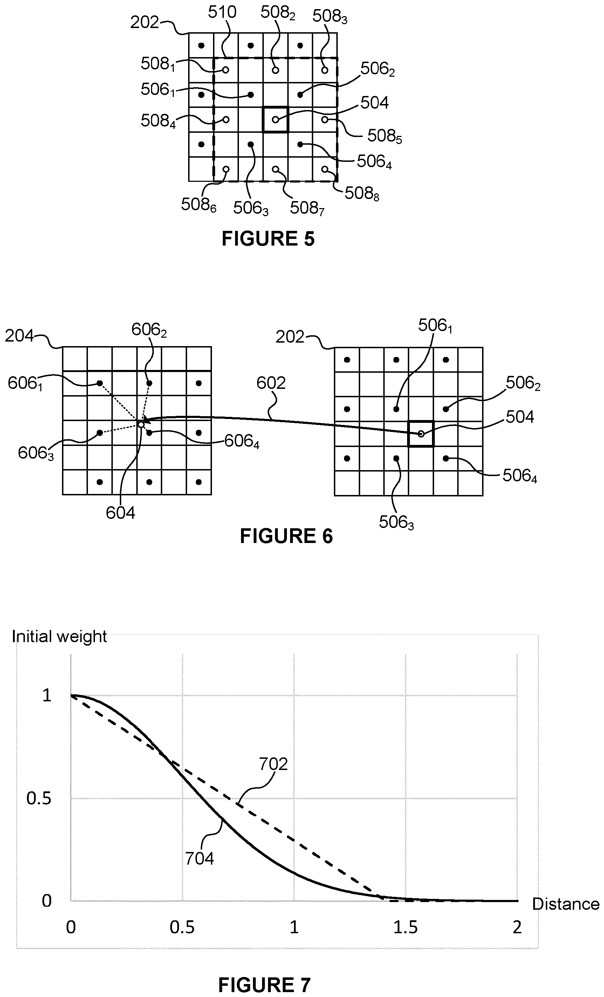

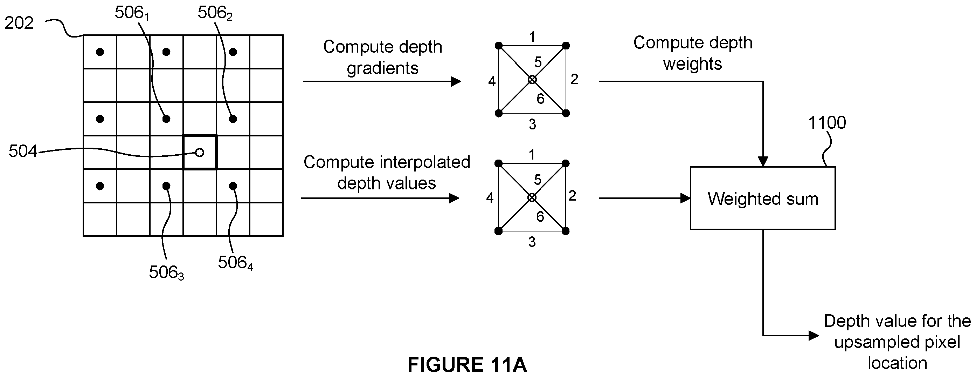

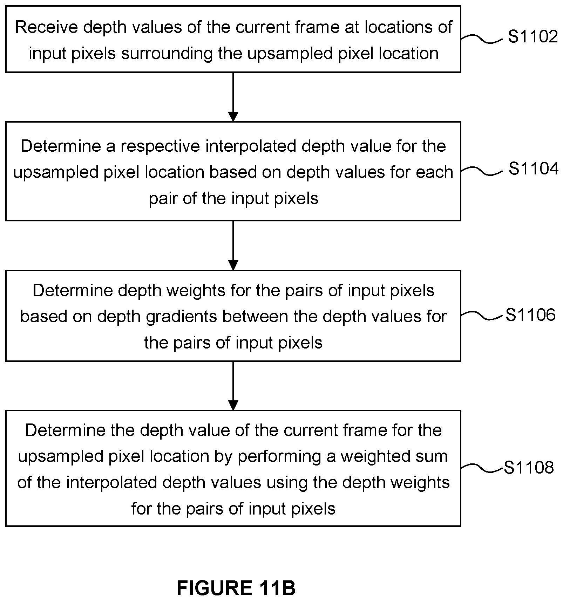

Figure 5 illustrates upsampled pixel locations of the current frame 202, indicating the upsampled pixel locations for which pixel values and/or depth values are obtained. In particular, the solid circles indicate upsampled pixel locations for which pixel values and depth values are obtained in step S404; and the empty circles indicate upsampled pixel locations for which depth values (but not pixel values) are obtained in step S404. Neither pixel values nor depth values are obtained in step S404 for upsampled pixel locations indicated by squares without circles in Figure 5. As mentioned above, the pixel values and depth values that are obtained in step S404 (and step S402) may be provided by a graphics rendering process, e.g. implemented by a graphics processing unit and sent to the processing module 302. Alternatively, as described in more detail below with reference to Figures 11A and 11B, in step S404 the graphics rendering process might provide depth values only for the locations of the pixels, i.e. only for the locations shown with solid circles in Figure 5 and not for the locations shown with empty circles. In those examples, the processing module 302 determines the depth values for the locations shown with empty circles as described in more detail below. This may be simpler and cheaper to implement in a graphics rendering process but may sacrifice some quality in the resulting resampled pixel values.

In step S406 one or more moments (i.e. statistics) are determined for locations of the current frame in a region surrounding an upsampled pixel location. The moments may include a mean and/or a standard deviation, and may be moments relating to the depth values and/or to the pixel values for the locations of the current frame in a region surrounding an upsampled pixel location. In other examples, the moments may include a variance and/or a range instead of, or in addition to, a standard deviation. In the example shown in Figure 5, a region 510 (shown with a dashed line) surrounds the upsampled pixel location 504. Within the region 510 there are four pixels of the current frame ($506_1$, $506_2$, $506_3$ and $506_4$) for which pixel values are obtained in step S404. Within the region 510 there are thirteen locations for which depth values are obtained for the current frame: locations 504, $506_1$, $506_2$, $506_3$, $506_4$, $508_1$, $508_2$, $508_3$, $508_4$, $508_5$, $508_6$, $508_7$ and $508_8$.

The mean of the depth values ($\mu_{depth}$) may be calculated as $\mu_{depth} = \frac{1}{N_D} \sum_{i=1}^{N_D} D_i$, where $D_i$ are the depth values obtained within the region 510 and $N_D$ is the number of depth values that are obtained within the region 510. The standard deviation of the depth values ($\sigma_{depth}$) may be calculated as $\sigma_{depth} = \sqrt{\left(\frac{1}{N_D}\sum_{i=1}^{N_D} D_i^2\right) - \mu_{depth}^2}$. In alternative examples the standard deviation of the depth values ($\sigma_{depth}$) may be calculated as $\sigma_{depth} = \sqrt{\frac{1}{N_D}\sum_{i=1}^{N_D}\left(D_i - \mu_{depth}\right)^2}$. With reference to the example shown in Figure 5, $N_D$ = 13 because there are thirteen locations for which depth values are obtained within the region 510. In other examples, $N_D$ may be different if the region 510 includes a different number of locations for which depth values are obtained.

The mean of the pixel values ($\mu_{pixel}$) may be calculated as $\mu_{pixel} = \frac{1}{N_{pixel}}\sum_{i=1}^{N_{pixel}} x_i$, where $x_i$ are the pixel values (e.g. Y channel values) obtained within the region 510 and $N_{pixel}$ is the number of pixel values that are obtained within the region 510. The standard deviation of the pixel values ($\sigma_{pixel}$) may be calculated as $\sigma_{pixel} = \sqrt{\left(\frac{1}{N_{pixel}}\sum_{i=1}^{N_{pixel}} x_i^2\right) - \mu_{pixel}^2}$. In alternative examples the standard deviation of the pixel values ($\sigma_{pixel}$) may be calculated as $\sigma_{pixel} = \sqrt{\frac{1}{N_{pixel}}\sum_{i=1}^{N_{pixel}}\left(x_i - \mu_{pixel}\right)^2}$. With reference to the example shown in Figure 5, $N_{pixel}$ = 4 because there are four locations for which pixel values are obtained within the region 510. In other examples, $N_{pixel}$ may be different if the region 510 includes a different number of locations for which pixel values are obtained.

Figure 6 illustrates a projection of the upsampled pixel location 504 of the current frame 202 to a location 604 in the reference frame 204. In step S408 the processing module 302 obtains a motion vector 602 for the upsampled pixel location 504 to indicate motion between the reference frame 204 and the current frame 202 for the upsampled pixel location 504. The motion vector 602 may be a forwards or a backwards motion vector (or a combination, e.g. an average, of a forwards and a backwards motion vector). A forwards motion vector represents motion from an earlier frame (e.g. the reference frame 204) to a later frame (e.g. the current frame 202); whereas, a backwards motion vector represents motion from a later frame (e.g. the current frame 202) to an earlier frame (e.g. the reference frame 204).

The term "obtaining" is used herein such that "obtaining" a value may refer to "determining" the value or "receiving" the value. As an example, the motion vector 602 may be determined during the graphics rendering process performed by the graphics processing unit that provided the pixel values and depth values, and step S408 may involve the processing module 302 receiving the motion vector 602 from the graphics processing unit. In alternative examples, the processing module 302 may determine the motion vector 602 itself based on the pixel values (and optionally the depth values) of the reference frame 204 and the current frame 202. Techniques for determining motion vectors are known in the art, and any suitable technique (such as optical flow or block matching) could be used in the examples described herein. The motion vector 602 may represent the (apparent) displacement of points from the current frame 202 to the reference frame 204, imaged at corresponding time instances. In some cases, rather than representing the actual motion of objects in a scene, the motion vector 602 may point to a location in the reference frame 204 that provides a best match (according to any suitable metric) to the upsampled pixel location 504 in the current frame 202, whether or not that corresponds to any actual motion of an object in the scene.

In step S410 the processing module 302 uses the motion vector 602 for the upsampled pixel location 504 to identify a plurality of the pixels of the reference frame 204. In particular, the upsampled pixel location 504 is projected to a location 604 in the reference frame 204 based on the motion vector 602, and a plurality of pixels of the reference frame are identified in the vicinity of the projected location in the reference frame. For example, the four pixels ($606_1$, $606_2$, $606_3$ and $606_4$) of the reference frame 204 that are the closest to the projected location 604 may be identified. As another example, the pixels of the reference frame may be identified as those contained by a box whose top-left corner is identified by subtracting 0.75 from both the X and Y coordinates of the projected location 602, and whose bottom-right corner is identified by adding 0.75 to both the X and Y coordinates of the projected pixel position (taking reference pixel centres in the high-resolution image space to be 1 apart). In other examples, a value other than 0.75 may be used, e.g. a value in a range from 0.75 up to, but not including, 1. Using a value that is less than 1 tends to exclude pixels of the reference frame that are more distant from the projected location 604, thus removing their effect on the pixel value being determined. For example, if the projected location 604 is very close to a pixel position of the reference frame then it may be the case that only that closest pixel is taken into account in determining the pixel value. In the case that the value is in the range 0.75 up to, but not including, 1, the region of pixels identified will be either 1x1, 1x2, 2x1 or 2x2 in size.

In other examples, more than four pixels of the reference frame may be identified, e.g. a 3x3 or a 4x4 block of pixels of the reference frame around the projected location may be identified.

Figure 4 shows a dashed box representing step S411 in which the processing module 302 combines the pixel values of the identified pixels 606 of the reference frame 204 to determine a pixel value for the upsampled pixel location 504. In simple examples, step S411 may involve performing bilinear interpolation of the identified pixels 606 of the reference frame. However, in other examples, such as the example shown in Figure 4, step S411 comprises steps S412 and S414.

In step S412 the processing module 302 determines a weight for each of the identified pixels 606 of the reference frame 204; and in step S414 the processing module 302 determines the pixel value for the upsampled pixel location 504 using the determined weight for each of the identified pixels 606. For example, step S414 may involve performing a weighted sum of the pixel values of the identified pixels 606 of the reference frame 204 using the determined weight for each of the identified pixels in the weighted sum.

The determination of a weight for an identified pixel 606 in step S412 may be performed in multiple steps. For example, an initial weight for an identified pixel may be determined and then the initial weight may be used (or 'refined') to determine the (final) weight for the identified pixel of the reference frame. For example, an initial weight for each of the identified pixels ($606_1$ to $606_4$) of the reference frame 204 may be determined by determining a distance between the projected location 604 and the location of the identified pixel 606 in the reference frame 204, and then mapping the distance to an initial weight using a predetermined relationship. The distances are shown with dotted lines in Figure 6. The distances may be any suitable measure of distance, e.g. L2 distances, squared L2 distances or L1 distances. In general, the initial weights may be determined using either linear or non-linear functions, or with machine learning methods (e.g. using a neural network to compute the weights).

The predetermined relationship which is used to map the distances to the initial weights may be any suitable relationship, e.g. a relationship defined by a function that decreases monotonically with distance and provides positive values in a range of distances from 0 to $\sqrt{2}$, such as a Gaussian relationship, a linear relationship or a relationship defined by a suitable cosine function. Figure 7 shows a graph illustrating a linear relationship (with the dashed line 702) and a Gaussian relationship (with the solid line 704) for mapping distances between the projected location and the locations of the pixels in the reference frame to initial weights for use in determining the pixel value for the upsampled pixel location. Using a Gaussian relationship for defining the initial weights can be beneficial in terms of reducing the effect of more distant pixels, e.g. the effect of the closest pixel ($606_4$) to the projected location 604 may be strengthened relative to the other identified pixels ($606_1$, $606_2$ and $606_3$). The initial weight ($w_{i,k}$) for an identified pixel, k, of the reference frame 204 can be determined using the distance (d) according to the Gaussian relationship as $w_{i,k} = \frac{1}{2\pi\sigma_w^2} e^{-\frac{d^2}{2\sigma_w^2}}$ . The variance of the Gaussian function, $\sigma_w^2$, may be different in different implementations. As an example, the variance of the Gaussian function, $\sigma_w^2$, may be set to be 0.4. The initial weights can then be used to determine the (final) weights for the identified pixels 606 of the reference frame 204.

In examples described herein the weight for each of the identified pixels 606 of the reference frame 204 is determined in dependence on: (i) the depth value of the current frame 202 for the upsampled pixel location 504, and (ii) the depth value for the location of the identified pixel 606 of the reference frame 204. By taking the depth values into account when determining the weights, the temporal resampling process can reduce blurring effects which may otherwise be introduced when temporal resampling is applied close to edges of objects being represented in the frames. For example, if the edge of an object in the scene passes through the region represented by the identified pixels 606 in the reference frame 204, and if all of the identified pixels are weighted equally then the effect will be to introduce blurring into the pixel values across the edge of the object. Since only some of the pixel values of the current frame are determined by temporal resampling, the presence of blurring in these pixel values but not in other pixel values can cause blocky artefacts, such as crenulation, which are very noticeable to a viewer of the images. Furthermore, by taking the depth values into account when determining the weights, the temporal resampling process can exclude occlusions. Rejecting hidden/misprojected samples improves edge definition and handles occlusions. If all pixels are rejected in this way, then a process of history rectification may be used (as described below) to fill in the missing pixel value. Normally the depth of an object in a scene will not vary by a large amount between frames of the sequence of frames. Therefore, if the depth value of an identified pixel 606 of the reference frame 204 is similar enough to the depth value for the upsampled pixel location 504 of the current frame 202 then that identified pixel 606 can be considered to be representing an adjacent point on the same surface as the upsampled pixel location 504 of the current frame, and can therefore be given a relatively high weight. Conversely, if the depth value of an identified pixel 606 of the reference frame 204 is not similar enough to the depth value for the upsampled pixel location 504 of the current frame 202 then that identified pixel 606 may be considered to be representing a non-adjacent point to that represented by the upsampled pixel location 504 of the current frame, which is indicative of an occlusion boundary being crossed, and can therefore be given a relatively low weight.

In particular, the weight for each of the identified pixels 606 of the reference frame 204 may be determined in dependence on a difference between the depth value of the current frame for the upsampled pixel location 504 and the depth value for the location of the identified pixel 606 of the reference frame. Furthermore, the weight for each of the identified pixels 606 of the reference frame 204 may be determined in dependence on the standard deviation of the depth

values, $\sigma_{depth}$, that was determined in step S406. For example, the difference between the depth value of the current frame for the upsampled pixel location 504 and the depth value for the location of the identified pixel 606 of the reference frame can be compared with a depth threshold, $T_d$, where the depth threshold is based on the determined standard deviation of the depth values, $\sigma_{depth}$, of the current frame within the region 510 surrounding the upsampled pixel location 504. The tolerance of the depth test (i.e. the value of $T_d$) may be adaptive. It is useful for the tolerance of the depth test (i.e. the value of $T_d$) to be adaptive for the following reasons: (i) If the current frame includes an oblique view of a surface, then there will be a higher depth error when the depth values of the current frame at that location are compared to the depths of corresponding pixels in the reference frame, which means a greater tolerance may be useful to avoid rejecting valid pixels; (ii) The processing system generally does not have control over the scale of the depth, e.g. some scenes may be rendered with distances in metres, and others in millimetres, so the value of $T_d$ may be adapted to correct for the scale in some way to have a robust depth test, and (iii) depth tests for nearby and distant objects should behave similarly. It is noted that non-adaptive methods (i.e. methods in which the value of $T_d$ is not adaptive) would only consider a single pixel we are comparing to. A typical non-adaptive approach would be to determine a threshold (i.e. $T_d$) for a current location based on the depth value at this location, e.g. +/- 10%. Such a non-adaptive method would assign bigger acceptable depth ranges to the locations further away (with large depth values) and smaller acceptable depth ranges to the locations closer to the camera (with small depth values). In contrast, in examples described herein, every location is treated similarly by using an adaptive method which accounts for the depths of the pixels around the location we are comparing to, e.g. based on the standard deviation of the depth values of the surrounding pixels.

If the depth of an identified pixel 606 from the reference frame 204 differs from a depth of the upsampled pixel location 504 in the current frame by more than the threshold amount, $T_d$, then the final weight for that identified pixel of the reference frame may be set to be low, e.g. zero. In other words, the weight for an identified pixel 606 of the reference image may be determined to be lower (e.g. zero) in response to determining that the difference between the depth value of the current frame for the upsampled pixel location 504 and the depth value for the location of the identified pixel 606 of the reference frame is greater than the depth threshold, $T_d$. The depth threshold, $T_d$, may be a hard (binary) threshold or it may be a soft threshold. Where the depth threshold, $T_d$, is a soft threshold then the weight for an identified pixel 606 of the reference image depends on the difference between the depth value of the current frame for the upsampled pixel location 504 and the depth value for the location of the identified pixel 606 of the reference frame, such that as that difference increases the weight for the identified pixel 606 decreases.

To put this more mathematically in the example in which a hard depth threshold is used, the weight, $w_k$, for an identified pixel, $k$, of the reference image 204 may be determined such that $w_k = w_{i,k} \cdot (|D_{ref,k} - D_{curr}| \leq T_d)$, where $T_d$ is the depth threshold, where $T_d = F_{depth} \cdot \sigma_{depth}$, and where $w_{i,k}$ is the initial weight for the identified pixel of the reference image (e.g. determined according to a distance to the projected location 604 and using a predetermined relationship as described above), $D_{ref,k}$ is the depth value for the location of the identified pixel 606 of the reference frame, $D_{curr}$ is the depth value of the current frame for the upsampled pixel location 504, $F_{depth}$ is a predetermined factor, and $\sigma_{depth}$ is the determined standard deviation of the depth values of the current frame within the region 510 surrounding the upsampled pixel location 504. The predetermined factor, $F_{depth}$, may be set by a developer to have a different value in different implementations, but to give an example, $F_{depth}$ may be 2. In some examples, the predetermined factor, $F_{depth}$, may be a trainable parameter, which may be pre-trained for a specific application. In the equation given above, $(|D_{ref,k} - D_{curr}| \leq T_d) = 1$ if $|D_{ref,k} - D_{curr}| \leq T_d$ and $(|D_{ref,k} - D_{curr}| \leq T_d) = 0$ if $|D_{ref,k} - D_{curr}| > T_d$. Therefore, if the difference between the depth value of the current frame for the upsampled pixel location 504 and the depth value for the location of the identified pixel 606 of the reference frame is not greater than the depth threshold, $T_d$, then $w_k = w_{i,k}$; and if the difference between the depth value of the current frame for the upsampled pixel location 504 and the depth value for the location of the identified pixel 606 of the reference frame is greater than the depth threshold, $T_d$, then $w_k = 0$. In this way, identified pixels 606 from the previous frame 204 that have significantly different depths to the upsampled pixel location 504 in the current frame 202 are rejected, which avoids (or at least reduces) artefacts that may be caused by blurring over object edges. The use of the standard deviation, $\sigma_{depth}$, makes the threshold, $T_d$, adaptive. The predetermined factor, $F_{depth}$, defines a confidence interval for the region, e.g. having $F_{depth} = 2$ corresponds to 95% coverage of the depths of the region 510.

As an example, of a soft threshold, a Gaussian weighting $$w_k = w_{i,k} \cdot e^{-\left(\frac{D_{ref,k} - D_{curr}}{T_d}\right)^2}$$ may be used. An advantage of using a soft threshold rather than a hard threshold is that it would help avoid sudden transitions between including and rejecting pixels, which may manifest as temporal artefacts. Furthermore, using a soft threshold may also make the algorithm continuously differentiable, which is useful in terms of being able to train the $F_{depth}$ factor.

As can be seen in the description above, the determination of the weights for the identified pixels involves a per-identified-pixel depth test. The use of the per-pixel depth tests does not blur object edges, and classifies relevant parts of the reference frame to use for temporal resampling. As a result, the quality of the temporal resampling of the methods described herein is better than can be achieved with other, known techniques, such as bilinear sampling methods. Furthermore, by taking a region of depth values in the current frame and a region of depth values in the reference frame into account (rather than comparing a single pixel to a single pixel), the depth tests described herein are made robust and adaptive in a way that leads to a much higher-quality depth test and thereby improved temporal resampling.

In some implementations, the threshold comparison could be replaced with a sigmoid function, which would make the solution differentiable, and therefore trainable using known training algorithms, e.g. based on back-propagation of errors.

It is noted that in the exceptional situation in which the weights for all of the identified pixels 606 of the reference frame 204 are determined to be zero, the pixel value for the upsampled pixel location 504 may be determined to be equal to the mean of the input pixel values, $\mu_{pixel}$, of the current frame 202 within the region 510 surrounding the upsampled pixel location 504. This can happen frequently in disoccluded regions in the current frame. As an alternative to using the mean of the (current frame) input pixels, a process of history rectification (as described below) can be relied upon in this situation.

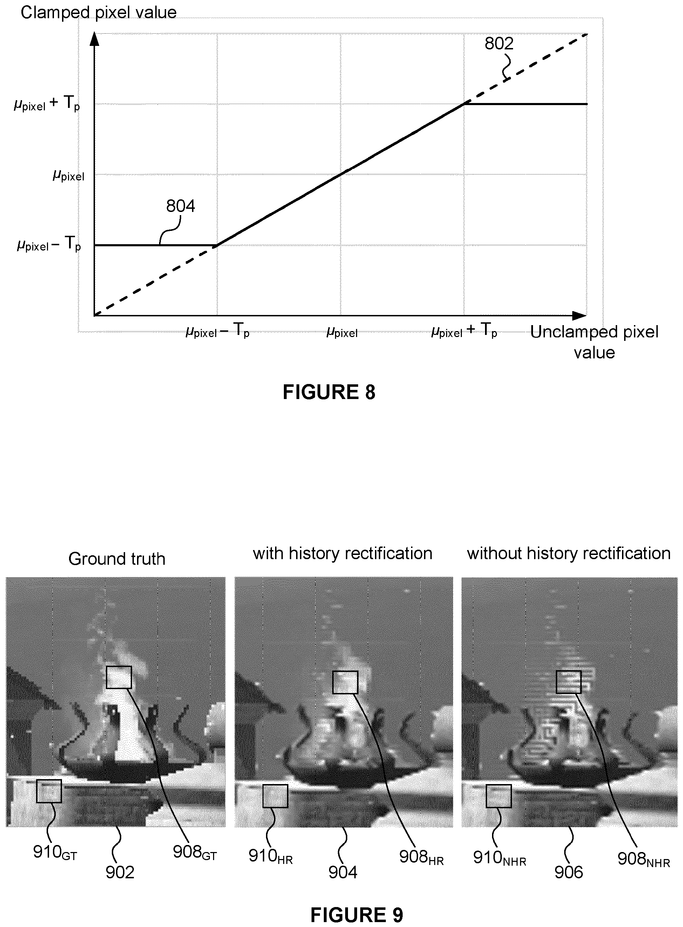

As described above, in step S414, when the weights for the identified pixels have been determined the pixel value for the upsampled pixel location can then be determined using the weights, e.g. by performing a weighted sum. The weights (w) are normalised to sum to 1 as $w' = \dfrac{w}{\Sigma w}$ before multiplying the normalised weights (w') with their respective reference input pixels, and summing to yield the temporally resampled result prior to the optional history rectification, which will now be described. A process, referred to herein as "history rectification", may be implemented to prevent significant errors by ensuring that the determined pixel value does not differ from the determined mean of the input pixel values, $\mu_{pixel}$, of the current frame 202 (determined in step S406) within the region 510 surrounding the upsampled pixel location 504 by more than a threshold value, $T_p$. For example, step S414 may comprise clamping the determined pixel value so that it does not differ from the determined mean of the input pixel values, $\mu_{pixel}$, of the current frame within the region 510 surrounding the upsampled pixel location 504 by more than the threshold value, $T_p$. The threshold value, $T_p$, may be based on the standard deviation of the input pixel values, $\sigma_{pixel}$, of the current frame within the region 510, as determined in step S406. In particular, the threshold value, $T_p$, may be determined as $T_p = F_{pixel} \cdot \sigma_{pixel}$, where $F_{pixel}$ is a threshold factor, which may be fixed or variable. The threshold factor, $F_{pixel}$, is a predetermined factor which may be pre-trained. The threshold factor, $F_{pixel}$, may have a different value in different implementations, and may be set by a developer. To give an example, $F_{pixel}$ may be 2. Figure 8 shows a graph illustrating clamping of the determined pixel value for the upsampled pixel location 504. The dashed line 802 represents applying no history rectification, i.e. no clamping, such that the pixel value is unaltered. The solid line 804 represents the result of applying history rectification, e.g. applying clamping, to the pixel value. If the (unclamped) pixel value is within a range from $(\mu_{pixel} - T_p)$ to $(\mu_{pixel} + T_p)$ then the history rectification, i.e. the clamping, does not alter the pixel value. However, if the (unclamped) pixel value is less than $(\mu_{pixel} - T_p)$ then the clamped pixel value 804 is set to be equal to $(\mu_{pixel} - T_p)$; and if the (unclamped) pixel value is greater than $(\mu_{pixel} + T_p)$ then the clamped pixel value 804 is set to be equal to $(\mu_{pixel} + T_p)$.

The history rectification process described in the preceding paragraph ensures that the resampled pixel value does not differ by too much from the neighbouring pixel values of the current low resolution image 202. History rectification is useful when the appearance at the projected location 604 in the reference frame 204 indicated by the motion vector 602 is not a good match for the appearance of the corresponding location 504 in the current frame 202. For example, history rectification is useful when a motion vector is not representative of actual motion between frames, e.g. for transparent objects, transparent overlays or for objects such as fire or mirrors. The history rectification method might be applied only on a single channel (the Y channel), and the colour can be filled in from the known-correct U and V values from the current frame, e.g. using simple spatial upsampling, such as bilinear upsampling, and relying on the low sensitivity of human vision to chroma (UV) spatial resolution. This is simple, effective and cheap (e.g. in terms of power, bandwidth and computation) compared to other techniques which operate in 3D colour space, and may result in improved visual quality relative to such techniques, since the chroma values at upsampled pixel locations are derived from nearby true values in the current frame (i.e. the possibility of gross chroma errors resulting from erroneous temporal resampling is entirely avoided).

Figure 9 shows three versions of a portion of an upsampled frame: (i) a ground truth version 902, (ii) a version 904 in which history rectification has been applied to the pixel values, and (iii) a version 906 in which history rectification has not been applied to the pixel values. This portion of the upsampled frame includes a rendering of fire. A region $908_{NHR}$ of the version 906 for which no history rectification is applied includes an image of the fire, and it can be seen that when no history rectification is applied then prominent blocky artefacts are introduced (compared to the corresponding region $908_{GT}$ of the ground truth version 902). These blocky artefacts are due to the motion vectors being a poor representation of motion of the fire, since the visual effect is not achieved by means of moving geometry. In contrast, the clamping that is applied by implementing history rectification greatly reduces the prominence of these blocky artefacts, as can be seen in the corresponding region $908_{HR}$ of the version 904 for which history rectification is applied.

However, history rectification may not always be beneficial. For example, history rectification can sometimes erroneously remove small image features (e.g. lines with a thickness approximately corresponding to the size of one upsampled pixel). For example, a region $910_{GT}$ of the ground truth version 902 includes a thin dark horizontal line near the top of the region, and it can be seen that this dark line is not present in the corresponding region $910_{HR}$ of the version 904 for which history rectification is applied. In contrast, the corresponding region $910_{NHR}$ in the version 906 for which no history rectification is applied includes this thin dark line.

As such, in some examples, history rectification may be selectively applied to some regions of the image and not to other regions. Usually, motion vectors will be incorrect or unreliable for an entire region of an image rather than isolated pixels, allowing a method based on local neighbourhood statistics to be used to selectively enable or disable the method, or alternatively to modulate the threshold value $T_p$. For example, pixel values may be determined within the region 510 surrounding the upsampled pixel location 504, without performing history rectification. The processing module 302 can compare an average of the pixel values determined within the region 510 with the mean of the input pixel values, $\mu_{pixel}$, of the current frame 202 within the region 510. If the difference between the average of the pixel values determined within the region 510, $\mu_{resampled}$, and the mean of the input pixel values, $\mu_{pixel}$, within that region 510 is greater than a threshold difference then the history rectification (i.e. the clamping) is performed; whereas if the difference between the average of the pixel values determined within the region 510 and the mean of the input pixel values, $\mu_{pixel}$, within that region 510 is not greater than the threshold difference then history rectification (i.e. clamping) is not performed. For example, the difference between the average of the pixel values within the region $908_{NHR}$ of the version 906 and the mean of the input pixel values, $\mu_{pixel}$, for that region (which will look similar to the region $908_{GT}$ of the ground truth version 902) will be large, e.g. greater than the threshold difference (if a suitable threshold difference is used), such that history rectification will be applied to this region such that this region of the upsampled image will look like the region $908_{HR}$ of the version 904. As another example, the difference between the average of the pixel values within the region $910_{NHR}$ of the version 906 and the mean of the input pixel values, $\mu_{pixel}$, for that region (which will look similar to the region $910_{GT}$ of the ground truth version 902) will be small, e.g. less than the threshold difference (if a suitable threshold difference is used), such that history rectification will not be applied to this region such that this region of the upsampled image will look like the region $910_{NHR}$ of the version 906.

In some examples, it may be possible to apply different levels of history rectification (i.e. different levels of clamping) to different regions of the image, e.g. by varying the value of $F_{pixel}$ for different regions. For example, the

$$T_p = \frac{F_{pixel} \cdot \sigma_{pixel}}{1 + |\mu_{pixel} - \mu_{resampled}|}$$

threshold value, $T_p$, for history rectification may be determined as . In this way, if the average of the pixel values determined within the region 510, $\mu_{resampled}$, and the mean of the input pixel values, $\mu_{pixel}$, are equal (i.e. if $\mu_{resampled} = \mu_{pixel}$) then the threshold value, $T_p$, is the same as given above, i.e. $T_p = F_{pixel} \cdot \sigma_{pixel}$; and as the difference between $\mu_{resampled}$ and $\mu_{pixel}$ increases in magnitude, the threshold value, $T_p$, decreases, meaning that history rectification is more likely to be applied. In general, the threshold value may be a soft threshold. Furthermore, in general, the clamping can be applied selectively to different extents to different regions. In particular an average of pixel values determined at upsampled pixel locations within the region surrounding the upsampled pixel location may be compared with the mean of the input pixel values of the current frame within the region surrounding the upsampled pixel location, and the clamping may be performed in dependence on a comparison of: (i) a difference between the average of pixel values determined at upsampled pixel locations within the region surrounding the upsampled pixel location and the mean of the input pixel values of the current frame within the region surrounding the upsampled pixel location, and (ii) a threshold difference.

When the pixel value has been determined for the upsampled pixel location 504 then in step S416 the processing module 302 determines whether there is another upsampled pixel location for which a pixel value is to be determined. If there is another upsampled pixel location for which a pixel value is to be determined then the method passes from step S416 back to step S406, and steps S406 to S416 are performed to determine a pixel value for the next upsampled pixel location. Each of the determined pixel values represents a value of an upsampled pixel at a respective upsampled pixel location which does not correspond with the location of any of the input pixels of the current frame. As described above, the upsampled pixel locations (or "temporally resampled pixel locations") are between the locations of diagonally adjacent input pixels of the current frame, such that the upsampled pixel locations and the locations of the input pixels form a repeating quincunx pattern. As described in more detail below, spatial upsampling may be performed on the resampled pixels to determine further upsampled pixel values for further upsampled pixels at further upsampled pixel locations between adjacent locations of the repeating quincunx pattern. In some examples, the pixel values at the upsampled pixel locations may be determined in parallel, i.e. the loop in the method shown in Figure 4 does not necessarily imply sequential processing.

If it is determined in step S416 that there is not another upsampled pixel location for which a pixel value is to be determined then the method passes from step S416 to step S418. In step S418 the processing module 302 outputs the determined pixel values for the current frame e.g. for use in implementing a super resolution technique. The outputted pixel values may be used in any suitable way, e.g. displayed on a display, stored in a memory or transmitted to another device over a network such as the internet. The processing module 302 may go on to determine pixel values for all of the frames of the sequence of frames 304.

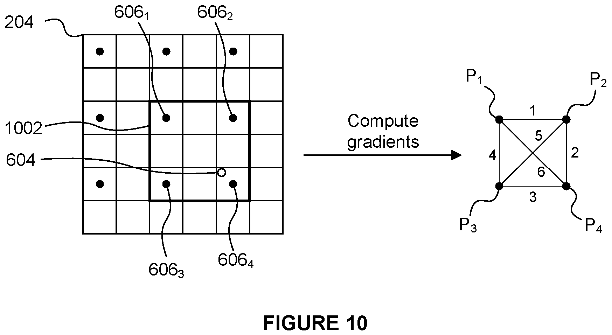

A more general example method for determining weights for combining pixel values 606 from the reference frame 204 for determining the pixel value at the upsampled pixel location 504 of the current frame 202 is now described with reference to Figure 10. As described above, the pixel location 504 of the current frame is projected to a location 604 in the reference frame 204. A set of (e.g. four pixels) of the reference frame (e.g. pixels $606_1$, $606_2$, $606_3$ and $606_4$ surrounding

the projected location 604) define a vicinity, $\Omega$, within the reference frame (denoted 1002 in Figure 10). In other examples, the vicinity, $\Omega$, may include a different number of pixels of the reference frame, e.g. the vicinity, $\Omega$, could include a 1x1, 2x1, 1×2 or 2x2 set of pixels within a box centred on the projected pixel location 604. In general, the temporally resampled pixel value at the upsampled pixel location 504 may be determined as a linear combination of the pixel values 606 in the vicinity, $\Omega$, of the reprojected pixel location 604 in the reference frame 204. This may be implemented in terms of a weighted sum, in which a normalised weight $w_i'$ is multiplied by the value $x_i$ of a corresponding reference pixel i, and the resulting values summed to produce the reprojected pixel value $y$ for the upsampled pixel location 504 of the current frame 202. To put this mathematically:

$$w_i' = \frac{w_i}{\sum_{j\in\Omega} w_j} \qquad y = \sum_{i\in\Omega} w_i' x_i$$

In the exceptional case that all weights in the vicinity $\Omega$ are zero (which may happen where all reference pixels are occluded), a fall-back spatial interpolation algorithm may be used. For example, the upsampled pixel value may be determined to be equal to the mean of the neighbouring input pixel values of the current frame. The weights may be considered a representation of the reliability of a given reference pixel 606 in determining the reprojected pixel value. Aspects which may reduce the reliability of a reference pixel 606, which may result in the use of a smaller corresponding weight for that reference pixel, would include:

  i. A large spatial distance between the reprojected sample location 604 and the location of the pixel 606 in the reference frame. This is described above.

  ii. A large difference in depth between the upsampled pixel location 504 in the current frame 202, and the pixel 606 in the reference frame 204, which may indicate a lack of visibility due to occlusion. This is described above.

  iii. A pixel value that is an outlier in the context of the vicinity $\Omega$. This is described below.

  iv. A depth value that is an outlier in the context of the vicinity $\Omega$. This is described below.

The reliability of the reference pixel 606 according to some or all of these cues may be determined separately, e.g. as separate weights for each reference pixel. These could be determined in any order, and then combined, for example by multiplication followed by normalisation to sum to one, such that the overall weight $w_i'$ representative of the confidence placed in reference pixel i is obtained.

Aspects iii and iv in the list given in the preceding paragraph determine the weights for the respective reference pixels 606 in dependence on whether that reference pixel is an outlier compared to the other pixels in the vicinity $\Omega$ of the reference frame. In other words, the weight for each of the identified pixels of the reference frame (i.e. for each of the reference pixels 606 in the vicinity $\Omega$) is determined in dependence on an extent to which the identified pixel of the reference frame is an outlier compared to the other identified pixels of the reference frame. A reference pixel 606 may be an outlier in terms of its pixel value or its depth value. In other words, the influence of reference pixels in the vicinity of the reprojected sample location 604 in the reference frame 204 on the reconstructed pixel value at the upsampled pixel location 504 of the current frame 202 depends on the similarity of the reference pixels to their neighbours, rather than to the value at the upsampled pixel location 504. This technique is independent from the location of the projected location 604 within the vicinity $\Omega$ of the reference frame 204, and is also independent of pixel values and depth values in the current frame 202. This provides a straightforward technique for improving the quality of temporal resampling. A reference pixel that is similar to the reference pixels in the vicinity $\Omega$ has a higher weight; and a reference pixel that is dissimilar to the reference pixels in the vicinity $\Omega$ has a lower weight. This can be achieved in different ways in different implementations, but some examples are given below. The same methods may be applied to either depth values or pixel values (e.g. Y channel values), or both. In the examples given below, the values are denoted $P = [P_1, P_2, P_3, P_4]$ for the corresponding pixels $606_1$, $606_2$, $606_3$ and $606_4$, where the $P$ values may be depth values or pixel values (e.g. Y channel values).

As a first example, a "distance" from a mean value in the vicinity may be used. This is a simple and effective technique. The mean of the values may be determined as $\mu = \frac{P_0 + P_1 + P_2 + P_3}{4}$ . A "distance" from (difference from) the mean for each value $P_i$ at pixel location i is determined as $|P_i - \mu|$. This is converted to a weight which assigns low values to more dissimilar pixels (i.e. those pixels with a higher "distance" from the mean). One way to do this is by using a softmax function with a temperature constant $\tau$. The value of this constant may be selected at implementation. To give an example, $\tau$ may be 0.1. To express this more mathematically, a contribution to the weight based on the distance to the mean ($w_{\text{mean}}$) may be determined as:

$$w_{\mathrm{mean}} = \mathrm{softmax}(-\tau|P - \mu|) \quad \mathrm{where} \quad \mathrm{softmax}(x) = \frac{e^{x-\max(x)}}{\sum_i e^{x_i-\max(x)}}$$

The $i^{\mathrm{th}}$ component $w_{\mathrm{mean},i}$ of the weight vector $w_{\mathrm{mean}}$ returned by this function corresponds to the $i^{\mathrm{th}}$ element $P_i$ of the value vector $P$.

As a second example, outliers may be determined based on gradients between the reference pixels 606 in the vicinity $\Omega$ of the reference frame 204. In the example shown in Figure 10, six gradients ($d_1$ to $d_6$) are defined as follows:

$$d_1 = |P_1 - P_2|$$

$$d_2 = |P_2 - P_4|$$

$$d_3 = |P_3 - P_4|$$

$$d_4 = |P_3 - P_1|$$

$$d_5 = |P_3 - P_2|$$

$$d_6 = |P_4 - P_1|$$

The gradients can then be accumulated on the edges to the adjoining nodes in quantities $Q_i$ corresponding to pixel locations $i$, such that:

$$Q_1 = d_1 + d_4 + d_6 \qquad Q_2 = d_1 + d_2 + d_5 \qquad Q_3 = d_3 + d_4 + d_5 \qquad Q_4 = d_2 + d_3 + d_6$$

A large value for $Q_i$ relative to other values in Q indicates that the corresponding value $P_i$ is an outlier in P. The values of $Q_i$ can be converted to a contribution to the weight based on the gradients ($w_{\mathrm{gradient}}$), e.g. using the softmax method:

$$w_{\mathrm{gradient}} = \mathrm{softmax}(-\tau Q) \quad \mathrm{where} \quad \mathrm{softmax}(x) = \frac{e^{x-\max(x)}}{\sum_i e^{x_i-\max(x)}}$$

In examples described above, a graphics rendering process determines a depth value for the current frame 202 at each of the pixel locations of the current frame (e.g. as denoted with the solid circles 506 in Figure 5) and at each of the locations denoted 504 and 508 in Figure 5 which are between diagonally adjacent input pixel locations of the current frame. Therefore, in these examples, the graphics rendering process determines depth values at twice as many locations as it determines pixel values. For example, in a first render pass a graphics processing unit may determine pixel values and depth values at the input pixel locations 506 for a current frame 202, and then in a second render pass the graphics processing unit may determine the depth values at the locations 504 and 508. The pixel values and depth values determined by the graphics processing unit are provided to the processing module 302 (e.g. in steps S402 and S404 of the method described above). Determining only the depth values is significantly simpler for the graphics processing unit compared to determining both the depth values and the pixel values, so the second render pass can be performed with a reduced latency and/or reduced power consumption compared to performing the first render pass. However, performing two render passes is still more costly (e.g. in terms of latency and power consumption) than performing just a single render pass for the current frame.

One other possibility would be a change to the GPU software (e.g. its driver) allowing it to render out all the quincunx depth values in a single render pass. In other examples, a graphics processing unit may perform a single render pass for the current frame (equivalent to the first render pass mentioned in the preceding paragraph) and may determine pixel values and depth values only at the input pixel locations 506 for the current frame 202. In these examples, the graphics processing unit does not determine the depth values at the locations 504 and 508. Therefore, in these examples, the processing module 302 receives the pixel values and depth values for the input pixel locations 506 of the current frame 202 from the graphics processing unit, and then it is the processing module 302 that determines the depth values at the locations 504 and 508 (in step S404). For example, the depth value at the location 504 could be determined to be equal to the depth value at one of the four neighbouring input pixel locations 506 (e.g. the top left neighbouring input pixel location

$506_1$). As another example, the depth value at the location 504 could be determined as an average (e.g. a mean or a median) of the depth values at the four neighbouring input pixel locations 506. Using a mean may be error prone and may damage the appearance of edges, whereas using a median may be more robust on edges. An example of a more sophisticated approach by which the processing module 302 can determine the depth values at the locations 504 and 508 is described with reference to Figures 11A and 11B. Figure 11A illustrates an example method for determining a depth value for the upsampled pixel location 504 of the current frame 202. Figure 11B is a flow chart of method steps for determining the depth value for the upsampled pixel location 504 in accordance with the example shown in Figure 11A.

In step S1102 the processing module 302 receives depth values of the current frame 202 at the locations of input pixels $506_1$, $506_2$, $506_3$ and $506_4$ surrounding the upsampled pixel location 504. As described above, these depth values may be received from a graphics processing unit which has determined the depth values by performing a graphics rendering process.

In step S1104, for each pair of input pixels of said input pixels for which depth values are received, the processing module 302 determines an interpolated depth value for the upsampled pixel location 504 based on the depth values for the pair of input pixels. In this way, six interpolated depth values are determined for the upsampled pixel location 504. In particular:

- a first interpolated depth value ($d_{int,1}$) for the upsampled pixel location 504 is determined for the pair of input pixels $506_1$ and $506_2$, e.g. as $d_{int,1} = \frac{1}{2}(d_1 + d_2)$;

- a second interpolated depth value ($d_{int,2}$) for the upsampled pixel location 504 is determined for the pair of input pixels $506_2$ and $506_4$, e.g. as $d_{int,2} = \frac{1}{2}(d_2 + d_4)$;

- a third interpolated depth value ($d_{int,3}$) for the upsampled pixel location 504 is determined for the pair of input pixels $506_3$ and $506_4$, e.g. as $d_{int,3} = \frac{1}{2}(d_3 + d_4)$;

- a fourth interpolated depth value ($d_{int,4}$) for the upsampled pixel location 504 is determined for the pair of input pixels $506_1$ and $506_3$, e.g. as $d_{int,4} = \frac{1}{2}(d_1 + d_3)$;

- a fifth interpolated depth value ($d_{int,5}$) for the upsampled pixel location 504 is determined for the pair of input pixels $506_2$ and $506_3$, e.g. as $d_{int,5} = \frac{1}{2}(d_2 + d_3)$; and

- a sixth interpolated depth value ($d_{int,6}$) for the upsampled pixel location 504 is determined for the pair of input pixels $506_1$ and $506_4$, e.g. as $d_{int,6} = \frac{1}{2}(d_1 + d_4)$,

where $d_1$, $d_2$, $d_3$ and $d_4$ are the respective depth values for the input pixels $506_1$, $506_2$, $506_3$ and $506_4$.

In step S1106 the processing module 302 determines depth weights for the pairs of input pixels based on depth gradients between the depth values for the pairs of input pixels. For example, in step S1106 the processing module 302 may determine, for each pair of input pixels of said input pixels for which depth values are received, a depth gradient based on the depth values for the pair of input pixels. In this way, six depth gradients may be determined. In particular:

- a first depth gradient ($\delta_1$) for the upsampled pixel location 504 may be determined for the pair of input pixels $506_1$ and $506_2$, e.g. as $\delta_1 = |d_2 - d_1|$;

- a second depth gradient ($\delta_2$) for the upsampled pixel location 504 may be determined for the pair of input pixels $506_2$ and $506_4$, e.g. as $\delta_2 = |d_4 - d_2|$;

- a third depth gradient ($\delta_3$) for the upsampled pixel location 504 may be determined for the pair of input pixels $506_3$ and $506_4$, e.g. as $\delta_3 = |d_4 - d_3|$;

- a fourth depth gradient ($\delta_4$) for the upsampled pixel location 504 may be determined for the pair of input pixels $506_1$ and $506_3$, e.g. as $\delta_4 = |d_3 - d_1|$;

- a fifth depth gradient ($\delta_5$) for the upsampled pixel location 504 may be determined for the pair of input pixels $506_2$ and $506_3$, e.g. as $\delta_5 = |d_2 - d_3|$; and

- a sixth depth gradient ($\delta_6$) for the upsampled pixel location 504 may be determined for the pair of input pixels $506_1$ and

$506_4$, e.g. as $\delta_6 = |d_4 - d_1|$.

The depth gradients can then be converted to the depth weights. For example, the depth weights for the pairs of input pixels may be determined by: (i) multiplying the depth gradients ($\delta_i$) for the pairs of input pixels by a negative number, $\beta$, and (ii) inputting the results of the multiplications into a softmax function. $\beta$ is a negative number, i.e. $\beta < 0$, and as an example $\beta = -2$, but it can be different in other examples.

A softmax function is known to those skilled in the art. For example, the inputs ($z_i$) to the softmax function are the results of multiplying the depth gradients by the negative number (i.e. $z_i = \beta\delta_i$), and the output of the softmax function (i.e. the depth weights, $w_{d,i}$) may be determined as $w_{d,i} = \frac{e^{z_i}}{\Sigma_{j=1}^{K} e^{z_j}}$. The softmax function normalises the inputs between 0 and 1 using exponentials. Changing the value of $\beta$ changes the distribution of the depth weights that are determined. By setting $\beta$ to be a negative number, the softmax function maps larger depth gradients to smaller depth weights and maps smaller depth gradients to larger depth weights. This is beneficial so that if a pair of input pixels have similar depths (i.e. a low depth gradient between their depth values) then this pair of input pixels is weighted more strongly than a pair of input pixels that have very different depths (i.e. a high depth gradient between their depth values) when determining the depth value for the upsampled pixel location 504.

The processing module 302 may comprise logic 1100 for performing a weighted sum. In step S1108 the logic 1100 determines the depth value (D) of the current frame for the upsampled pixel location 504 by performing a weighted sum of the determined interpolated depth values ($d_{int,i}$) using the determined depth weights ($w_{d,i}$) for the pairs of input pixels, $i$. That is, $D = \Sigma_{i=1}^{P} w_{d,i} d_{int,i}$, where P is the number of pairs of input pixels ($P = 6$ in the example described in detail herein). Once the depth value for the upsampled pixel location 504 has been determined then the method can proceed as described above with reference to Figure 4.

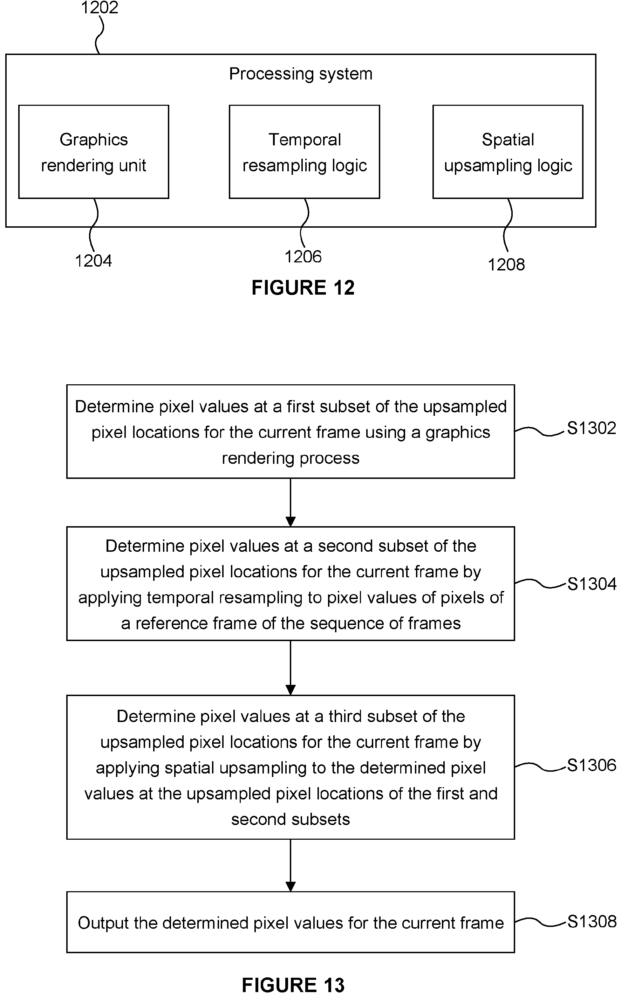

Figure 12 illustrates a processing system 1202 for determining pixel values at upsampled pixel locations for a current frame of a sequence of frames as described herein. The processing system 1202 comprises a graphics rendering unit 1204, temporal resampling logic 1206 and spatial upsampling logic 1208. It is noted that the graphics rendering unit 1204 may be referred to as a graphics processing unit. The temporal resampling logic 1206 may be the same as the temporal resampling logic 306 of the processing module 302 described above. The spatial upsampling logic 1208 may, or may not, be implemented on the same processing module as the temporal resampling logic 1206. Each of the graphics rendering unit 1204, the temporal resampling logic 1206 and the spatial upsampling logic 1208 may be implemented in software, hardware, or a combination thereof.

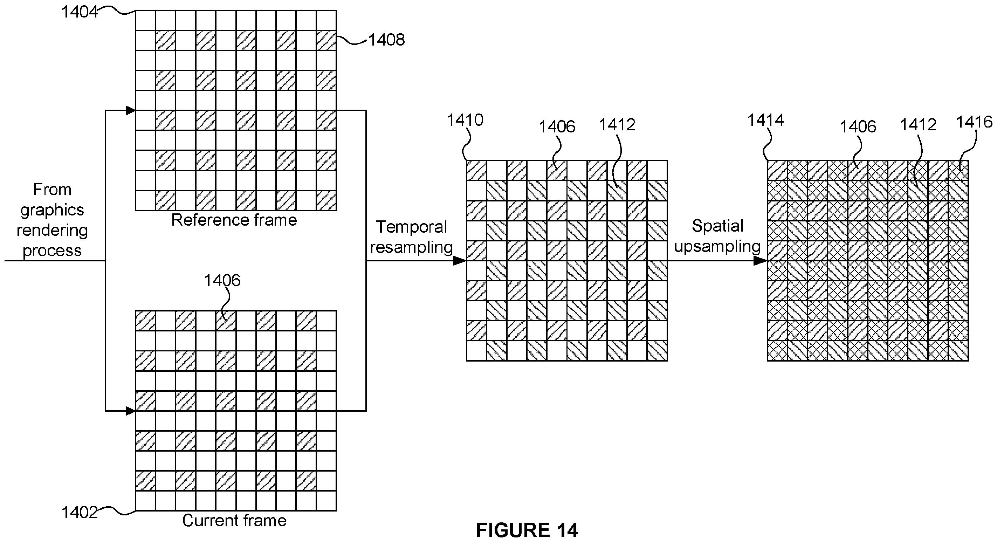

Figure 13 is a flow chart for a method of determining pixel values at upsampled pixel locations for a current frame of a sequence of frames. Furthermore, Figure 14 illustrates temporal resampling and spatial upsampling being applied to frames of a sequence of frames in accordance with the method shown in the flow chart of Figure 13. The current frame is denoted 1402 in Figure 14, and this may be the same as the current frame 202 in the examples described above. Furthermore, a reference frame is denoted 1404 in Figure 14, and this may be the same as the reference frame 204 in the examples described above. The reference frame 1404 may be a previous frame or a later frame relative to the current frame 1402 in the sequence of frames. For example, the reference frame 1404 may be the frame immediately preceding the current frame 1402 in the sequence of frames.

In step S1302 the graphics rendering unit 1204 determines pixel values at a first subset of the upsampled pixel locations for the current frame 1402 using a graphics rendering process. Techniques for rendering pixel values in a graphics processing unit 1204 are known in the art, and as such are not described in detail herein. For example, the graphics rendering process may be a rasterisation process or a ray tracing process. As described above, the pixel values may be Y channel values.

Figure 14 shows the pixel values which are rendered by the graphics processing unit 1204 with diagonal hatching (e.g. pixel 1406 in the current frame 1402, and pixel 1408 in the reference frame 1404). The squares of the current frame 1402 and of the reference frame 1404 which are shown without hatching in Figure 14 are upsampled pixel locations for which the graphics processing unit 1204 does not render pixel values. It can be seen in Figure 14 that for each frame, the graphics processing unit 1204 renders pixel values for a quarter of the upsampled pixel locations, and the rendered pixel values are evenly distributed throughout the frame, such that for each 2x2 block of upsampled pixel locations there is one rendered pixel value and three upsampled pixel locations for which pixel values are not rendered by the graphics processing unit.

In step S1304 the temporal resampling logic 1206 determines pixel values at a second subset of the upsampled pixel locations for the current frame by applying temporal resampling to pixel values of pixels of the reference frame 1404 of the sequence of frames. The temporal resampling may be performed as described above, e.g. with reference to the method shown in Figure 4. In particular, for each of the upsampled pixel locations of the second subset, a pixel value may be determined by: using a motion vector for the upsampled pixel location to identify a plurality of the pixels of the reference frame, and combining the pixel values of the identified pixels of the reference frame to determine the pixel value for the upsampled pixel location of the second subset. The result of the temporal resampling is denoted 1410 in Figure 14, where the pixels values at the first subset of upsampled pixel locations (e.g. location 1406) are shown with upwards diagonal hatching, and the pixels values at the second subset of upsampled pixel locations (e.g. location 1412) are shown with downwards diagonal hatching.

In the example shown in Figure 14, the upsampled pixel locations of the first and second subsets (at 1410) form a repeating quincunx pattern, i.e. a chequerboard pattern. That is, the upsampled pixel locations of the second subset (e.g. location 1412) are between diagonally adjacent upsampled pixel locations of the first subset (e.g. location 1406). Therefore, for each of the upsampled pixel locations of the first subset which are not on the edge of the current frame, the nearest four upsampled pixel locations of the repeating quincunx pattern are upsampled pixel locations of the second subset; and for each of the upsampled pixel locations of the second subset which are not on the edge of the current frame, the nearest four upsampled pixel locations of the repeating quincunx pattern are upsampled pixel locations of the first subset.

A jitter pattern may be used over the sequence of frames such that pixel values are determined using a graphics rendering process at different upsampled pixel locations for different frames of the sequence of frames. In the example shown in Figure 14, the subset of upsampled pixel locations for which pixel values are determined using a graphics rendering process alternates for successive frames of the sequence of frames between being the first subset of upsampled pixel locations and being the second subset of upsampled pixel locations.

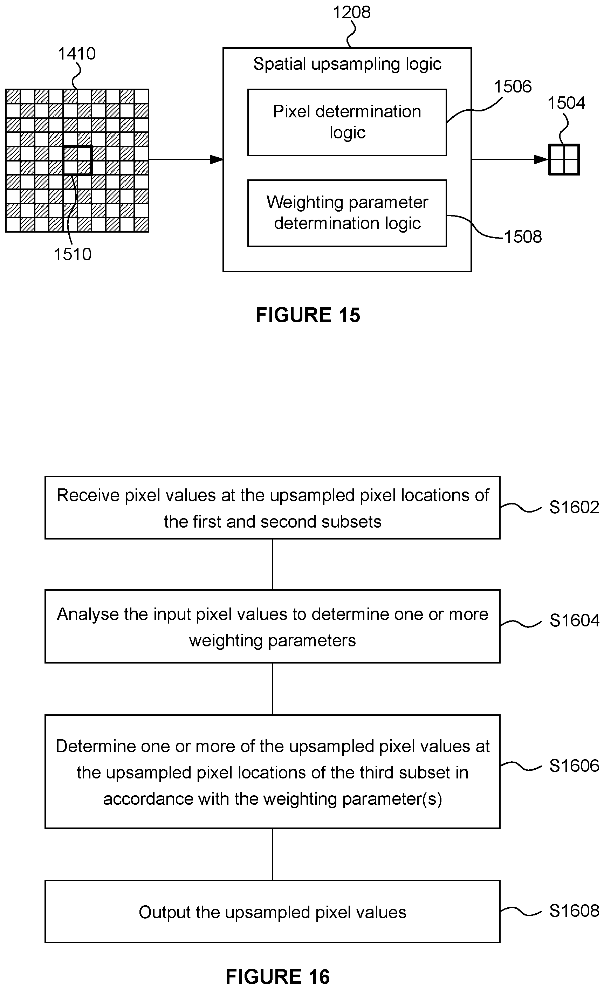

In step S1306 the spatial upsampling logic 1208 determines pixel values at a third subset of the upsampled pixel locations for the current frame 1402 by applying spatial upsampling to the determined pixel values at the upsampled pixel locations of the first and second subsets. Techniques for applying spatial upsampling are known in the art, and some examples of how spatial upsampling could be applied are described below with reference to Figures 15 to 19b. The upsampled pixel locations of the third subset are in the gaps of the repeating quincunx pattern. In other words, the upsampled pixel locations of the third subset fill in the gaps of the repeating quincunx pattern shown in 1410. The result of the spatial upsampling is denoted 1414 in Figure 14, where the pixels values at the first subset of upsampled pixel locations (e.g. location 1406) are shown with upwards diagonal hatching, the pixels values at the second subset of upsampled pixel locations (e.g. location 1412) are shown with downwards diagonal hatching, and the pixels values at the third subset of upsampled pixel locations (e.g. location 1416) are shown with diagonal cross-hatching. It can be seen in 1414 that each of the upsampled pixel locations of the third subset which are not on the edge of the current frame is either: (i) between two horizontally adjacent upsampled pixel locations of the first subset and between two vertically adjacent upsampled pixel locations of the second subset, or (ii) between two vertically adjacent upsampled pixel locations of the first subset and between two horizontally adjacent upsampled pixel locations of the second subset.

It can be seen that 1414 has a pixel value for each of the upsampled pixel locations, i.e. there are no spaces (i.e. no squares without hatching) in 1414. The first, second and third subsets of upsampled pixel locations are distinct, such that there are no upsampled pixel locations that belong to more than one of the first, second and third subsets. Furthermore, all of the upsampled pixel locations for the current frame belong to one of the first, second and third subsets. As shown in 1414 in the example of Figure 14, for a 2x2 block of upsampled pixel locations there is one location from the first subset (shown with upwards diagonal hatching), one location from the second subset (shown with downwards diagonal hatching) and two locations from the third subset (shown with diagonal cross-hatching). The two locations from the third subset are diagonally opposite each other in the 2x2 block. As such, a quarter of the upsampled pixel locations for the current frame are in the first subset, a quarter of the upsampled pixel locations for the current frame are in the second subset, and half of the upsampled pixel locations for the current frame are in the third subset.

In step S1308 the processing system 1202 outputs the determined pixel values for the current frame e.g. for use in implementing a super resolution technique. The outputted pixel values may be used in any suitable way, e.g. displayed on a display, stored in a memory or transmitted to another device over a network such as the internet. The processing system 1202 may go on to determine pixel values for all of the frames of the sequence of frames.

It is noted that the combination of temporal resampling and spatial upsampling in examples described herein means that 2x upsampling can be applied to the pixel values rendered by the graphics rendering unit 1204, i.e. the graphics rendering unit 1204 only needs to render a quarter of the pixel values in the final upsampled images. Furthermore, due to the jitter pattern of the locations of the pixels that are rendered by the graphics rendering unit 1204 for different frames of the sequence of frames, the temporal resampling can be used to determine pixel values at upsampled locations for which the graphics rendering unit 1204 has rendered pixel values for the reference frame. A pixel value at the same location of successive frames is unlikely to change by a large amount, so the temporal resampling for these locations can provide very accurate pixel values. The spatial upsampling is also accurate in this system because of the repeating quincunx pattern of the locations of the first and second subsets, i.e. because all of the locations for which spatial upsampling is used to determine an upsampled pixel value (i.e. all of the upsampled pixel locations of the third subset) are horizontally adjacent and vertically adjacent to at least one (normally two, unless it is a location on the edge of the frame) location of the first or second subsets for which pixel values have already been determined. As such, the combination of temporal resampling and spatial upsampling can provide better quality upsampled pixel values (i.e. upsampled pixel values with fewer noticeable artefacts) compared to just using one of temporal resampling and spatial upsampling, and this is achieved without requiring the graphics rendering unit 1204 to render more of the pixel values, e.g. without requiring the graphics rendering unit 1204 to render more than a quarter of the pixel values. The temporal resampling logic and the spatial upsampling logic can be implemented predominantly in hardware, e.g. fixed-function circuitry, and they can process pixel values faster (i.e. with reduced latency) compared to performing twice as many render passes through the graphics rendering unit 1204. As such, the performance of the processing system 1202 (e.g. in terms of frames per second that are output) is better than if the graphics rendering unit 1204 were to directly render more of the pixel values. Furthermore, the power consumption and silicon area of the temporal resampling logic 1206 and spatial upsampling logic 1208 are small, so it is not costly to add these logic blocks to the processing system 1202. It is noted that spatially upsampling from 2 out of 4 pixels allows the final pixel values to get close to the ground truth image quality, which is not generally possible when upsampling from 1 out of 4 pixels. Furthermore, temporal resampling is relatively expensive in terms of execution time, power and bandwidth on resource-limited devices compared to spatial upsampling, particularly if we were trying to use it to fill in all the missing pixels. The combination of temporal resampling and spatial upsampling as described herein provides a good compromise, which gives high image quality and a low cost, e.g. in terms of execution time, power consumption, bandwidth and silicon area.

In some examples, the spatial upsampling logic 1208 may determine the pixel values at the third subset of the upsampled pixel locations by performing bilinear interpolation on determined pixel values at the upsampled pixel locations of the first and second subsets. Bilinear interpolation is a simple approach to performing spatial upsampling.

In other examples, a more complex approach to performing spatial upsampling may be used by the spatial upsampling logic 1208, which avoids or reduces artefacts, such as blurring that may be introduced by bilinear interpolation. These examples are described with reference to Figures 15 to 19b.

Figure 15 shows the spatial upsampling logic 1208 configured to apply upsampling to pixel values 1410, which represent an image region, to determine a block of upsampled pixel values 1504, e.g. for use in implementing a super resolution technique. The block of upsampled pixel values 1504 represents a location within the image region indicated with the square 1510 in Figure 15. In this example, the pixel values 1410 that are received by the spatial upsampling logic 1208 have locations corresponding to a 10x10 block of upsampled pixel locations, and the block of upsampled pixel values 1504 is a 2x2 block of upsampled pixels representing the central 2x2 portion of the 10x10 block of upsampled pixel locations. However, it is noted that in other examples the shapes and/or sizes of the image region represented by the pixel values 1410 and the block of upsampled pixel values may be different. The spatial upsampling logic 1208 comprises pixel determination logic 1506 and weighting parameter determination logic 1508.

Rather than using bilinear upsampling, the spatial upsampling logic 1208 may perform upsampling which is dependent upon relative horizontal and vertical variation of the pixel values 1410 within the image region. In this way, the upsampling takes account of anisotropic features (e.g. edges) in the image, to reduce 'staircasing' and 'crenulation' artefacts and blurring that can occur near anisotropic features (e.g. edges, particularly diagonal edges of computer-generated images), compared to the case where bilinear upsampling is used.

A method of using the spatial upsampling logic 1208 to apply upsampling to the pixel values 1410 to determine the block of upsampled pixel values 1504, e.g. for use in implementing a super resolution technique, is described with reference to the flow chart of Figure 16.

In step S1602 the pixel values 1410 at the upsampled pixel locations of the first and second subsets are received at the spatial upsampling logic 1208. As described above, the pixel values 1410 of the first and second subsets of upsampled pixel locations have locations corresponding to a repeating quincunx arrangement (or 'chequer board pattern') of upsampled pixel locations. The first subset of upsampled pixel locations corresponds to locations within odd rows of the repeating quincunx arrangement of upsampled pixel locations, and the second subset of upsampled pixel locations corresponds to locations within even rows of the repeating quincunx arrangement of upsampled pixel locations.

In step S1604 the weighting parameter determination logic 1508 analyses the pixel values 1410 at the upsampled pixel locations of the first and second subsets to determine one or more weighting parameters. The one or more weighting parameters are indicative of a directionality of filtering to be applied when upsampling is applied to the determined pixel values at the upsampled pixel locations of the first and second subsets. For example, the one or more weighting parameters may be indicative of relative horizontal and vertical variation of the pixel values 1410 at the upsampled pixel locations of the first and second subsets. As such, the weighting parameters may be referred to as directional weighting parameters. For example, two weighting parameters ($a$ and $b$) may be determined in step S1604. The weighting parameters may be normalised, so that $a + b = 1$. This means that as one of $a$ or $b$ increases the other decreases. As will become apparent from the description below, if the parameters are set such that $a = b = 0.5$ then the system will give the same outputs as a bilinear upsampler. However, in the system described herein, $a$ and $b$ can be different, i.e. we can have $a \neq b$. Furthermore, since $b = 1 - a$, the weighting parameter determination logic 1508 might output an indication of a single weighting parameter, e.g. $a$, and this can be used to determine the second weighting parameter, $b$, as $1 - a$. An indication of the one or more weighting parameters is provided to the pixel determination logic 1506.

In step S1606 the pixel determination logic 1506 determines one or more of the upsampled pixel values of the block of upsampled pixel values 1504 in accordance with the relative horizontal and vertical variation of the pixel values 1410 at the upsampled pixel locations of the first and second subsets indicated by the determined one or more weighting parameters.

In step S1608 the block of upsampled pixel values 1504 is output from the pixel determination logic 1506. In some systems this could be the end of the processing on the block of upsampled pixel values 1504 and it could be output from the spatial upsampling logic 1208 (and maybe from the processing system 1202) as shown in Figure 15. In other examples, adaptive sharpening may be applied to the upsampled pixel values (e.g. by blending with sharpened upsampled pixel values) before they are output from the spatial upsampling logic 1208.

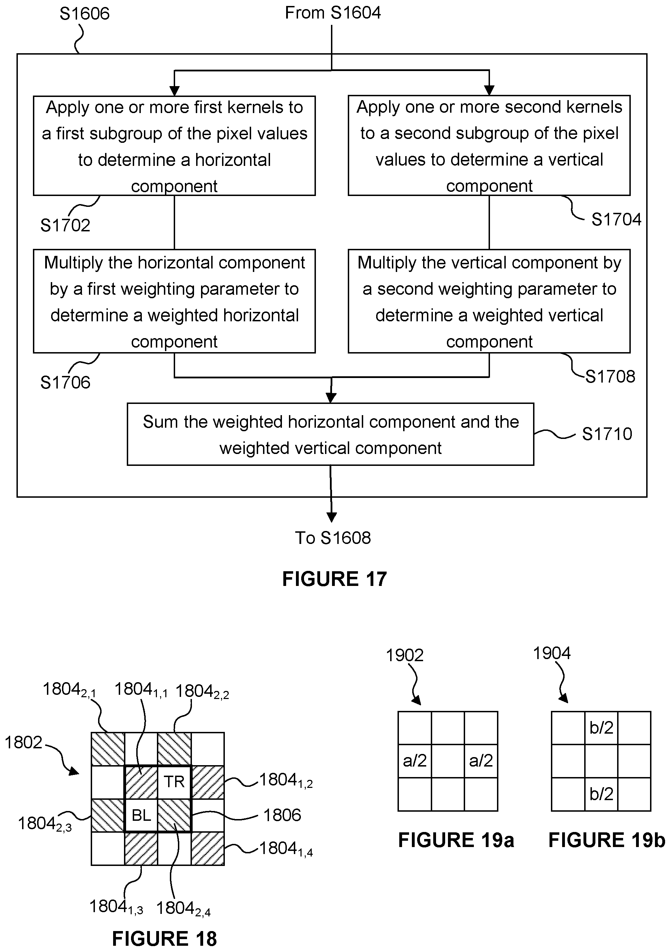

Figure 17 is a flow chart showing how the pixel determination logic 1506 can determine an (unsharpened) upsampled pixel value in step S1606 in accordance with the relative horizontal and vertical variation of the pixel values 1410 at the upsampled pixel locations of the first and second subsets. Figure 18 shows a portion of the input pixel values 1802 and illustrates how the location of a block of upsampled pixel values 1806 relates to the locations of the input pixel values 1804. Each of the upsampled pixel values that is determined in accordance with the relative horizontal and vertical variation of the pixel values 1410 at the upsampled pixel locations of the first and second subsets, in step S1606, is at a respective upsampled pixel location of the third subset (and not of the first or second subsets). In particular, the top right and the bottom left upsampled pixel value in the block of upsampled pixel values (denoted "TR" and "BL" in Figure 18) are determined in step S1606 in accordance with the relative horizontal and vertical variation of the pixel values 1410 at the upsampled pixel locations of the first and second subsets. If no sharpening is being applied then the input pixel values having locations (of the first and second subsets) corresponding to the repeating quincunx arrangement of upsampled pixel locations are used as the upsampled pixel values at those upsampled pixel locations of the block of upsampled pixel values (e.g. the pixel values at the top left and bottom right locations of the block of upsampled pixel values 1806 are "passed through" to the corresponding locations in the output block). If sharpening is applied then some processing may be performed on the input pixel values to determine all of the upsampled pixel values in the block of upsampled pixel values.

As described above, the input pixel values 1804 are at locations of the first and second subsets. In Figure 18, input pixel values $1804_{1,1}$, $1804_{1,2}$, $1804_{1,3}$ and $1804_{1,4}$, which are shown with upwards diagonal line hatching, are at upsampled pixel locations of the first subset; whereas input pixel values $1804_{2,1}$, $1804_{2,2}$, $1804_{2,3}$ and $1804_{2,4}$, which are shown with downwards diagonal line hatching, are at upsampled pixel locations of the second subset.

As shown in Figure 17, step S1606 of determining each of said one or more of the upsampled pixel values at the third subset of upsampled pixel locations comprises applying one or more kernels to at least some of the pixel values at the upsampled pixel locations of the first and second subsets in accordance with the determined one or more weighting parameters. In particular, in step S1702 the pixel determination logic 1506 applies one or more first kernels (which may be referred to as horizontal kernels) to at least a first subgroup of the input pixel values 1804 to determine a horizontal component. For example, a kernel of [0.5,0.5] can be applied to the input pixel values which are horizontally adjacent and either side of the upsampled pixel location for which an upsampled pixel value is being determined. For example, when step S1702 is performed for the upsampled pixel value denoted "TR" in Figure 18 then the horizontal kernel is applied to pixel values $1804_{1,1}$ and $1804_{1,2}$ at upsampled pixel locations of the first subset. When step S1702 is performed for the upsampled pixel value denoted "BL" in Figure 18 then the horizontal kernel is applied to pixel values $1804_{2,3}$ and $1804_{2,4}$ at upsampled pixel locations of the second subset.

In step S1704 the pixel determination logic 1506 applies one or more second kernels (which may be referred to as vertical kernels) to at least a second subset of the input pixel values 1804 to determine a vertical component. For example, a kernel of $\begin{bmatrix} 0.5 \\ 0.5 \end{bmatrix}$ can be applied to the input pixel values which are vertically adjacent and either side of the upsampled pixel location for which an upsampled pixel value is being determined. For example, when step S1704 is performed for the upsampled pixel value denoted "TR" in Figure 18 then the vertical kernel is applied to pixel values $1804_{2,2}$ and $1804_{2,4}$ at upsampled pixel locations of the second subset. When step S1704 is performed for the upsampled pixel value denoted "BL" in Figure 18 then the vertical kernel is applied to pixel values $1804_{1,1}$ and $1804_{1,3}$ at upsampled pixel locations of the first subset.

It is noted that each of the one or more of the upsampled pixel locations of the third subset, for which step S1606 is performed, has two horizontally adjacent pixel values which are both at locations of the same subset (either from the first subset or the second subset) and has two vertically adjacent pixels which are both at locations of the other of the first and second subsets (either from the second subset or the first subset). It is also noted that steps S1702 and S1704 may be performed in any order, e.g. sequentially, or may be performed in parallel.

In steps S1706 to S1710 the pixel determination logic 1506 combines the determined horizontal and vertical components, such that each of said one or more of the upsampled pixel values is determined in accordance with the relative horizontal and vertical variation of the pixel values 1410 at the upsampled pixel locations of the first and second subsets as indicated by the one or more weighting parameters determined in step S1604. In particular, in step S1706 the pixel determination logic 1506 multiplies the horizontal component (determined in step S1702) by a first of the weighting parameters, *a,* to determine a weighted horizontal component.

In step S1708 the pixel determination logic 1506 multiplies the vertical component (determined in step S1704) by a second of the weighting parameters, b, to determine a weighted vertical component. Steps S1706 and S1708 may be performed in any order, e.g. sequentially, or may be performed in parallel.

In step S1710 the pixel determination logic 1506 sums the weighted horizontal component and the weighted vertical component to determine the upsampled pixel value. In some examples, the kernels applied in S1702 and S1704 may be multiplied by the first and second weighting parameters respectively before, or during, application to the input pixel values. This is expected to be less power- and area-efficient in hardware than the method described with reference to Figure 17, since the application of kernels of Figures 19a and 19b may be obtained using only cheap fixed bit shifts and additions, and the number of variable multiplies required is considerably lower.

Figure 19a shows a 3x3 kernel 1902 (which may be implemented as a 1x3 kernel) which can be applied to the input pixel values 1802 to represent the effect of performing steps S1702 and S1706 for an upsampled pixel location for which an upsampled pixel value is being determined. For example, the kernel 1902 could be centred on the upsampled pixel location for which a value is being determined and applied to the input pixel values 1802 such that the result would be given by the dot product $\left[\frac{a}{2},\frac{a}{2}\right]$ . **h**, where **h** is a vector of the horizontally adjacent pixel values. For example, if the upsampled pixel value denoted "TR" is being determined then $\boldsymbol{h} = [p_{1,1}, p_{1,2}]$ where $p_{1,1}$ is the value of input pixel $1804_{1,1}$ and $p_{1,2}$ is the value of input pixel $1804_{1,2}$. Similarly, if the upsampled pixel denoted "BL" is being determined then $\boldsymbol{h} = [p_{2,3}, p_{2,4}]$, where $p_{2,3}$ is the value of input pixel $1804_{2,3}$ and $p_{2,4}$ is the value of input pixel $1804_{2,4}$.

Similarly, Figure 19b shows a 3x3 kernel 1904 (which may be implemented as a 3x1 kernel) which can be applied to the input pixels 1802 to represent the effect of performing steps S1704 and S1708 for an upsampled pixel location for which an upsampled pixel value is being determined. For example, the kernel 1904 could be centred on the upsampled pixel location for which a value is being determined and applied to the input pixels 1802 such that the result would be given by the dot product $\left[\frac{b}{2},\frac{b}{2}\right].\boldsymbol{v}$ , where **v** is a vector of the vertically adjacent pixel values. For example, if the upsampled pixel value denoted "TR" is being determined then $\boldsymbol{v} = [p_{2,2}, p_{2,4}]$, where $p_{2,2}$ is the value of input pixel $1804_{2,2}$ and $p_{2,4}$ is the value of input pixel $1804_{2,4}$. Similarly, if the upsampled pixel value denoted "BL" is being determined then $\boldsymbol{v} = [p_{1,1}, p_{1,3}]$, where $p_{1,1}$ is the value of input pixel $1804_{1,1}$ and $p_{1,3}$ is the value of input pixel $1804_{1,3}$.

As such, steps S1702 to S1710 can be summarised as determining the upsampled pixel values denoted TR and BL as the sum of dot products: $\left[\frac{a}{2},\frac{a}{2}\right].\boldsymbol{h} + \left[\frac{b}{2},\frac{b}{2}\right].\boldsymbol{v}$ , where **h** and **v** are vectors of adjacent pixel values as described above for the TR and BL pixels respectively.

The values of the weighting parameters, *a* and b, may be set in dependence on the local context, such that by determining the upsampled pixel values in step S1606 in accordance with the determined weighting parameters the upsampled pixel values are determined in accordance with the relative horizontal and vertical variation of the pixel values of the first and second subsets. In this way, the weighting parameters can be used to reduce artefacts and blurring over anisotropic features (e.g. edges) in the image, which may otherwise result from an upsampling process. As described above, the weighting parameter determination logic 408 analyses the input pixels in step S1604 to determine the one or more weighting parameters. In this way the one or more weighting parameters are determined for the particular image region being processed, such that different weighting parameters can be used in the upsampling process for different image regions. In other words, the weighting parameters can be adapted to suit the particular local context of the image region for which upsampled pixel values are being determined. This allows suitable weighting parameters to be used for different image regions based on the different anisotropic image features present in the different image regions.

For example, the weighting parameter determination logic 1508 of the spatial upsampling logic 1208 may comprise an implementation of a neural network for determining the weighting parameter(s). The implementation of the neural network may be implemented on any suitable hardware, e.g. a GPU or a neural network accelerator (NNA), or as fixed-function hardware with predetermined, fixed weights. The neural network may have been trained, e.g. using Quantization Aware Training (QAT), to output an indication of the one or more weighting parameters to be indicative of a directionality of filtering to be applied when upsampling is applied to the determined pixel values at the upsampled pixel locations of the first and second subsets.

The spatial upsampling logic 1208 may or may not be configured to apply sharpening as well as spatial upsampling. As such, in some examples, the pixel values at the third subset of the upsampled pixel locations are non-sharpened upsampled pixel values; whereas in some other examples, the pixel values at the third subset of the upsampled pixel locations are sharpened upsampled pixel values. Techniques for applying sharpening are known in the art, and as such are not described in detail herein.

The description of the examples given above operate in an accordance with a 'Finite Impulse Response (FIR)' technique. In other words, the reference frame(s) are low resolution images, with pixel values at the same resolution as the input pixel values of the current frame. However, in other examples, the techniques can be adapted to operate in an accordance with an 'Infinite Impulse Response (IIR)' technique. In other words, the reference frame(s) may be high resolution images which are the result of applying the upsampling technique to the reference frame, and which have pixel values at the same resolution as the output (i.e. upsampled) pixel values of the current frame. To implement the techniques according to an IIR approach a feedback loop may be introduced so that the output of the spatial algorithm for a previous frame can be used as the reference frame for the temporal resampling process performed for the current frame. Including this feedback loop, might make the system more complicated and expensive (e.g. in terms of power, bandwidth and GPU SRAM use) to implement, but it may increase the quality of the output images.

The components of the processing system 1202 (i.e. the graphics rendering unit 1204, the temporal resampling logic 1206 and the spatial upsampling logic 1208) may or may not be implemented within the same device. In some examples, the processing system 1202 may be implemented as a distributed system (e.g. a "client/server system"). For example, the processing system may comprise a first device and a second device which are arranged to communicate with each other over a network. The graphics rendering unit 1204 and the temporal resampling logic 1206 may be implemented at the first device (e.g. a server), and the spatial upsampling logic 1208 may be implemented at the second device (e.g. a client, which may for example be a mobile device). In this way, the server side is responsible for producing the rendered and temporally resampled pixels, and the client side is responsible for spatial upsampling. The client and the server may be in physically separate locations, but can communicate with each other over a network, e.g. over the internet, over a wired connection, and/or over a wireless connection such as a WiFi or Bluetooth connection. The client, which may be implemented at a mobile device (e.g. a handheld, battery-powered device) generally has tighter constraints (in terms of factors such as power consumption, physical size, etc.) than the server, which is typically not implemented as a mobile device. Implementing the different components of the processing system 1202 at different devices, e.g. in a client/server system as described above, may be advantageous for one or more of the following reasons:

- Transmission bandwidth between the server and the client is halved compared to a system in which the whole processing system is implemented at the server, since only data corresponding to pixels in the first and second subsets are transmitted.

- The server does the most expensive (e.g. in terms of power consumption, and device bandwidth) parts of the processing, e.g. the temporal resampling. This is beneficial because it avoids consuming system resources on the client, and allows less capable hardware (e.g. a smaller GPU) to be implemented at the client device without impacting the quality of the output images that are produced. This is in-line with the general benefits of cloud rendering.

- The client side may have dedicated, fixed-function hardware for very efficient, low-latency spatial upsampling, so implementing the spatial upsampling logic 1208 at the client is beneficial.

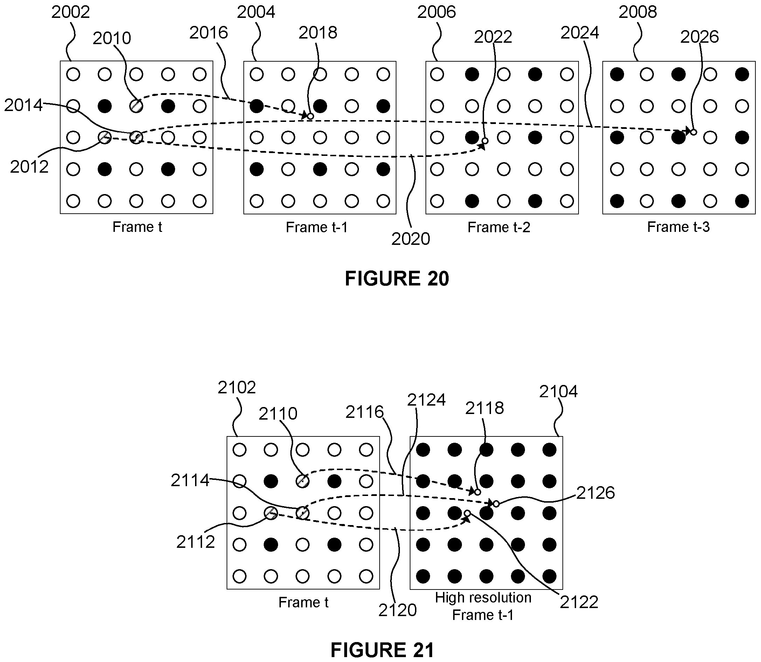

In some examples, rather than implementing a processing system which includes both temporal resampling and spatial upsampling, just temporal resampling may be implemented to process the pixel values output from the graphics rendering unit to determine pixel values for all of the upsampled pixel locations. In these examples, spatial upsampling is not implemented. Figure 20 illustrates pixel values of a sequence of frames indicating how upsampled pixel locations can be projected to locations in reference frames according to an example implementing a "Finite Impulse Response" (FIR) approach. The term FIR is used by analogy to FIR filtering in signal processing applications, which combine signal values from multiple time instances in a non-recursive fashion to yield a filtered output for a current time instance. In this example, the current frame 2002 is denoted "Frame t" in Figure 20, and there are three reference frames: "Frame t-1" 2004, "Frame t-2" 2006 and "Frame t-3" 2008. For each of the frames, the graphics rendering unit renders a quarter of the upsampled pixel values, e.g. it renders the pixel values at the first subset of the upsampled pixel locations as described above. The rendered pixel values are represented with solid circles in Figure 20. In this example, temporal resampling is used to determine the upsampled pixel values for the other three quarters of the upsampled pixel locations of the current frame 2002 (which are shown as empty circles or circles with hatching in Figure 20). It can be seen that the set of locations at which the graphics rendering unit renders the pixel values is jittered over the sequence of frames, and in particular, so that over a sequence of four frames a pixel value is rendered by the graphics rendering unit at all of the upsampled pixel locations. In other words, a jitter pattern is used over the sequence of frames, such that different frames of the sequence have pixels at locations corresponding to different upsampled pixel locations. Therefore, if the camera (i.e. a viewpoint) is static then all of the high resolution pixel locations are rendered once during a sequence of four frames in this example.

Figure 20 illustrates how three of the upsampled pixel values (2010, 2012 and 2014) can be determined using temporal resampling. In the example shown in Figure 20, for each of the upsampled pixel locations, a motion vector is obtained which can be used to project that upsampled pixel location to a projected location in one reference frame (in particular, the reference frame for which the graphics rendering unit rendered a pixel value at the corresponding upsampled pixel location). Specifically, a motion vector 2016 is used to project the upsampled pixel location 2010 of the current frame 2002 to a projected location 2018 of the reference frame 2004; a motion vector 2020 is used to project the upsampled pixel location 2012 of the current frame 2002 to a projected location 2022 of the reference frame 2006; and a motion vector 2024 is used to project the upsampled pixel location 2014 of the current frame 2002 to a projected location 2026 of the reference frame 2008. In this FIR approach, the resolution of the pixels of the reference frame is the same as the resolution of the input pixels of the current frame. The temporal resampling technique can then proceed for each of the upsampled pixel locations (2010, 2012 and 2014) as described above with reference to Figure 4 using the pixel values of the respective reference frame to which the locations of the upsampled pixel locations have been projected. In this way, temporal resampling logic can determine the upsampled pixel values at the locations 2010, 2012 and 2014 based on three low resolution reference frames.

Figure 21 illustrates pixel values of a sequence of frames indicating how upsampled pixel locations can be projected to locations in a reference frame according to an example implementing an "Infinite Impulse Response" (IIR) approach. The term IIR is used by analogy to IIR filtering in signal processing applications, which reuse previously calculated results in a recursive fashion to yield a filtered output for a current time instance. In this example, the current frame 2102 is denoted "Frame t" in Figure 21, and there is one reference frame: "Frame t-1" 2104. In this IIR approach, a high-resolution reference frame 2104 is used in place of the low-resolution frame 204. The high-resolution reference frame 2104 is the result of applying upsampling to the low resolution reference frame, such that the high-resolution reference frame 2104 has pixel values for all of the upsampled pixel locations. In other words, in this IIR approach, the resolution of the pixels of the reference frame 2104 is the same as the resolution of the upsampled pixels. It is still the case that for each of the frames, the graphics rendering unit renders a quarter of the upsampled pixel values, e.g. it renders the pixel values at the first subset of the upsampled pixel locations as described above. The rendered pixel values of the current frame 2102 and the determined pixel values of the reference frame 2104 are represented with solid circles in Figure 21. In this example, temporal resampling is used to determine the pixel values for the other three quarters of the upsampled pixel locations of the current frame 2102 (which are shown as empty circles or circles with hatching in Figure 21). As in previously described examples, the set of locations at which the graphics rendering unit renders the pixel values may be jittered over the sequence of frames, e.g. so that over a sequence of four frames a pixel value is rendered by the graphics rendering unit at all of the upsampled pixel locations. Therefore, if the camera (i.e. a viewpoint) and scene are static then all of the high resolution pixel locations are rendered once during a sequence of four frames in this example.

Figure 21 illustrates how three of the pixel values (2110, 2112 and 2114) can be determined using temporal resampling. In the example shown in Figure 21, for each of the upsampled pixel values, a motion vector is obtained which can be used to project the location of that upsampled pixel value to a projected location in the reference frame 2104. Specifically, a motion vector 2116 is used to project the upsampled pixel location 2110 of the current frame 2102 to a projected location 2118 of the reference frame 2104; a motion vector 2120 is used to project the upsampled pixel location 2112 of the current frame 2102 to a projected location 2122 of the reference frame 2104; and a motion vector 2124 is used to project the upsampled pixel location 2114 of the current frame 2102 to a projected location 2126 of the reference frame 2104. To avoid rendering a high-resolution motion vector field, some of the motion vectors may be upsampled/interpolated from a low-resolution motion vector field. The temporal resampling technique can then proceed for each of the upsampled pixel locations (2110, 2112 and 2114) as described above with reference to Figure 4 using the pixel values of the reference frame 2104. In this way, temporal resampling logic can determine the upsampled pixel values at the locations 2110, 2112 and 2114 based on one high resolution reference frame.

The IIR approach (described with reference to Figure 21) has some advantages over the FIR approach (described with reference to Figure 20). For example, in the IIR approach the pixels of the reference frame are closer together so the distances between the projected location and the identified pixels in the reference frame (which are used to determine the weights for combining the identified pixels for determining the pixel value at the upsampled pixel location) are smaller than in the FIR approach. Having smaller distances tends to mean that the values of the identified pixels are a better approximation for the pixel value at the upsampled pixel location. However, the IIR approach also has some disadvantages over the FIR approach. For example, errors that are determined in performing upsampling for one frame will propagate to the next frame, and can persist for multiple frames in the IIR approach, whereas in the FIR approach errors in performing upsampling for one frame will not necessarily propagate to the next frame. Therefore, the choice of whether to use the FIR approach or the IIR approach is implementation dependent.

In the temporal resampling method shown in Figure 4, depth values and pixel values are obtained for the reference frame and for the current frame in steps S402 and S404. In other examples, fewer than all four of these four things could be obtained. For example, if history rectification is not implemented, or if depth values are not used to determine the weights then the temporal resampling logic might not need to obtain all of these things. Similarly, in some examples it might not be necessary to determine the mean and the standard deviation of the pixel values and of the depth values for the region 510 of the current frame in step S406.

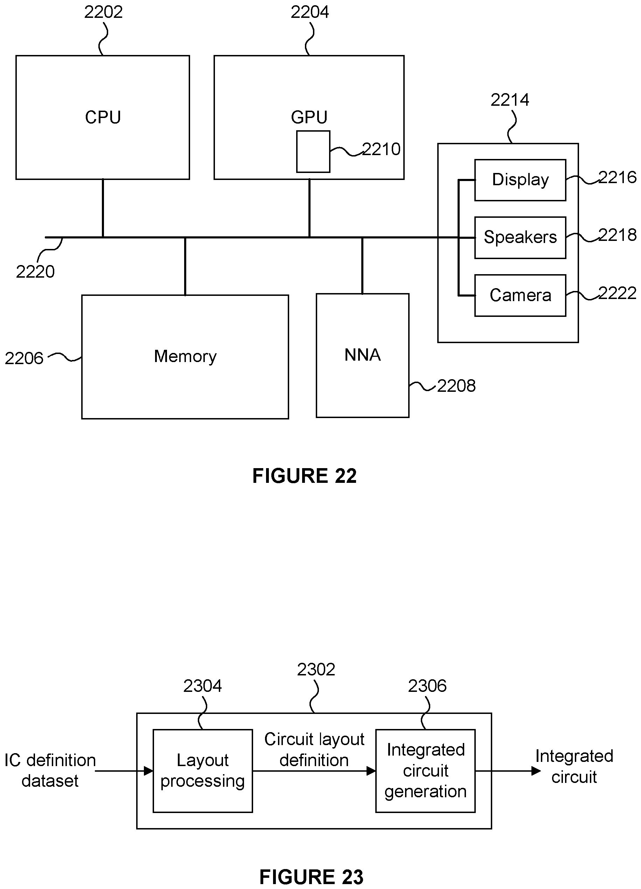

Figure 22 shows a computer system in which the processing modules or processing systems described herein may be implemented. The computer system comprises a CPU 2202, a GPU 2204, a memory 2206, a neural network accelerator (NNA) 2208 and other devices 2214, such as a display 2216, speakers 2218 and a camera 2222. A processing block 2210 (corresponding to the processing modules described herein) is implemented on the GPU 2204. In other examples, one or more of the depicted components may be omitted from the system, and/or the processing block 2210 may be implemented on the CPU 2202 or within the NNA 2208 or in a separate block in the computer system. The components of the computer system can communicate with each other via a communications bus 2220. The GPU 2204 may correspond to the graphics rendering unit 1204.

The processing modules and processing systems described herein are shown as comprising a number of functional blocks. This is schematic only and is not intended to define a strict division between different logic elements of such entities. Each functional block may be provided in any suitable manner. It is to be understood that intermediate values described herein as being formed by a processing module or a processing system need not be physically generated by the processing module or processing system at any point and may merely represent logical values which conveniently describe the processing performed by the processing module or processing system between its input and output.

The processing modules and processing systems described herein may be embodied in hardware on an integrated circuit. The processing modules or processing systems described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a random-access memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be or comprise any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e. run) in an integrated circuit manufacturing system configures the system to manufacture a processing module or a processing system configured to perform any of the methods described herein, or to manufacture a processing module or a processing system comprising any apparatus described herein. An integrated circuit definition dataset may be, for example, an integrated circuit description.

Therefore, there may be provided a method of manufacturing, at an integrated circuit manufacturing system, a processing module or processing system as described herein. Furthermore, there may be provided an integrated circuit definition dataset that, when processed in an integrated circuit manufacturing system, causes the method of manufacturing a processing module or processing system to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g. providing commands, variables etc.) may be required in order for a computer system configured for generating a manufacturing definition of an integrated circuit to execute code defining an integrated circuit so as to generate the manufacturing definition of that integrated circuit.

An example of processing an integrated circuit definition dataset at an integrated circuit manufacturing system so as to configure the system to manufacture a processing module or processing system will now be described with respect to Figure 23.

Figure 23 shows an example of an integrated circuit (IC) manufacturing system 2302 which is configured to manufacture a processing module or processing system as described in any of the examples herein. In particular, the IC manufacturing system 2302 comprises a layout processing system 2304 and an integrated circuit generation system 2306. The IC manufacturing system 2302 is configured to receive an IC definition dataset (e.g. defining a processing module or processing system as described in any of the examples herein), process the IC definition dataset, and generate an IC according to the IC definition dataset (e.g. which embodies a processing module or processing system as described in any of the examples herein). The processing of the IC definition dataset configures the IC manufacturing system 2302 to manufacture an integrated circuit embodying a processing module or processing system as described in any of the examples herein.

The layout processing system 2304 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g. in terms of logical components (e.g. NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 2304 has determined the circuit layout it may output a circuit layout definition to the IC generation system 2306. A circuit layout definition may be, for example, a circuit layout description.

The IC generation system 2306 generates an IC according to the circuit layout definition, as is known in the art. For example, the IC generation system 2306 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 2306 may be in the form of computer-readable code which the IC generation system 2306 can use to form a suitable mask for use in generating an IC.

The different processes performed by the IC manufacturing system 2302 may be implemented all in one location, e.g. by one party. Alternatively, the IC manufacturing system 2302 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a processing module or processing system without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g. by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to Figure 23 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in Figure 23, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g. in integrated circuits) performance improvements can be traded-off against the physical implementation, thereby improving the method of manufacture. For example, a performance improvement may be traded against layout area, thereby matching the performance of a known implementation but using less silicon.

This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description it will be evident to a person skilled in the art that various modifications may be made within the scope of the invention.

ANNEX

Some numbered clauses are provided below, which form part of this disclosure:

101. A method of determining one or more pixel values at a respective one or more upsampled pixel locations for a current frame of a sequence of frames, the method comprising:

obtaining depth values for locations of pixels of a reference frame of the sequence of frames; and

for each of the one or more upsampled pixel locations:

obtaining a depth value of the current frame for the upsampled pixel location;

obtaining a motion vector for the upsampled pixel location to indicate motion between the reference frame and the current frame for the upsampled pixel location;

using the motion vector for the upsampled pixel location to identify one or more of the pixels of the reference frame;

determining a weight for each of the one or more identified pixels of the reference frame in dependence on: (i) the depth value of the current frame for the upsampled pixel location, and (ii) the depth value for the location of the identified pixel of the reference frame; and

determining the pixel value for the upsampled pixel location using the determined weight for each of the one or more identified pixels.

102. The method of clause 101 further comprising obtaining pixel values of the one or more identified pixels of the reference frame of the sequence of frames, wherein said determining the pixel value for the upsampled pixel location comprises performing a weighted sum of the pixel values of the one or more identified pixels of the reference frame using the determined weight for each of the one or more identified pixels in the weighted sum.

103. The method of clause 101 or 102 wherein for each of the one or more upsampled pixel locations, the weight for each of the one or more identified pixels of the reference frame is determined in dependence on a difference between the depth value of the current frame for the upsampled pixel location and the depth value for the location of the identified pixel of the reference frame.

104. The method of any of clauses 101 to 103 further comprising, for each of the one or more upsampled pixel locations:

obtaining a plurality of depth values of the current frame for locations within a region surrounding the upsampled pixel location; and

determining a standard deviation of the depth values of the current frame within the region, wherein the weight for each of the one or more identified pixels of the reference frame is determined further in dependence on: (iii) the determined standard deviation of the depth values.

105. The method of clause 104 when dependent upon clause 103, wherein said determining a weight for each of the one or more identified pixels of the reference frame comprises comparing the difference between the depth value of the current frame for the upsampled pixel location and the depth value for the location of the identified pixel of the reference frame with a depth threshold, wherein the depth threshold is based on the determined standard deviation of the depth values of the current frame within the region.

106. The method of clause 105 wherein the weight for an identified pixel of the reference image is determined to be lower in response to determining that the difference between the depth value of the current frame for the upsampled pixel location and the depth value for the location of the identified pixel of the reference frame is greater than the depth threshold.

107. The method of clause 106 wherein the depth threshold is a hard threshold, and wherein the weight, $w_k$, for an identified pixel, k, of the reference image is determined such that $w_k = w_{i,k} \cdot (|D_{ref,k} - D_{curr}| \leq T_d)$, where $T_d$ is the depth threshold, where $T_d = F_{depth} \cdot \sigma_{depth}$, and where $w_{i,k}$ is an initial weight for the identified pixel of the reference image, $D_{ref,k}$ is the depth value for the location of the identified pixel of the reference frame, $D_{curr}$ is the depth value of the current frame for the upsampled pixel location, $F_{depth}$ is a predetermined factor, and $\sigma_{depth}$ is the determined standard deviation of the depth values of the current frame within the region surrounding the upsampled pixel location.

108. The method of clause 106 wherein the depth threshold is a soft threshold, and wherein the weight, $w_k$, for an identified pixel, k, of the reference image is determined such $w_k = w_{i,k} \cdot e^{-\left(\frac{\left(D_{ref,k}-D_{curr}\right)}{T_d}\right)^2}$, where $T_d$ is the depth threshold, where $T_d = F_{depth} \cdot \sigma_{depth}$, and where $w_{i,k}$ is an initial weight for the identified pixel of the reference image, $D_{ref,k}$ is the depth value for the location of the identified pixel of the reference frame, $D_{curr}$ is the depth value of the current frame for the upsampled pixel location, $F_{depth}$ is a predetermined factor, and $\sigma_{depth}$ is the determined standard deviation of the depth values of the current frame within the region surrounding the upsampled pixel location.

109. The method of any of clauses 101 to 108 wherein said using the motion vector for the upsampled pixel location to identify one or more of the pixels of the reference frame comprises projecting the upsampled pixel location to a location in the reference frame based on the motion vector and identifying one or more of the pixels of the reference frame in the vicinity of the projected location in the reference frame.

110. The method of any of clauses 101 to 109 wherein, for each of the one or more upsampled pixel locations, said determining a weight for each of the one or more identified pixels of the reference frame comprises determining an initial weight and using the initial weight to determine the weight for the identified pixel of the reference frame.

111. The method of clause 110 when dependent upon clause 109 wherein the initial weight for each of the one or more identified pixels of the reference frame is determined by:

determining a distance between the projected location and the location of the identified pixel in the reference frame; and

mapping the distance to an initial weight using a predetermined relationship.

112. The method of clause 111 wherein the predetermined relationship is a Gaussian relationship or a linear relationship.

113. The method of any of clauses 101 to 112 wherein, for each of the one or more upsampled pixel locations, the weight for each of the one or more identified pixels of the reference frame is determined in dependence on an extent to which the identified pixel of the reference frame is an outlier compared to the other identified pixels of the reference frame.

114. The method of any of clauses 101 to 113 further comprising, for each of the one or more upsampled pixel locations:

obtaining a plurality of input pixel values of the current frame for locations within a region surrounding the upsampled pixel location; and

determining a mean of the input pixel values of the current frame within the region surrounding the upsampled pixel location.

115. The method of clause 114 wherein said determining the pixel value for the upsampled pixel location comprises clamping the determined pixel value so that it does not differ from the determined mean of the input pixel values of the current frame within the region surrounding the upsampled pixel location by more than a threshold value.

116. The method of clause 115 further comprising, for each of the one or more upsampled pixel locations:

determining a standard deviation of the input pixel values of the current frame within the region surrounding the upsampled pixel location,

wherein the threshold value is based on the determined standard deviation of the input pixel values of the current frame within the region.

117. The method of clause 116 wherein for each of the one or more upsampled pixel locations, the threshold value is $F_{pixel} \cdot \sigma_{pixel}$, where $F_{pixel}$ is a predetermined factor, and $\sigma_{pixel}$ is the determined standard deviation of the input pixel values of the current frame within the region surrounding the upsampled pixel location.

118. The method of any of clauses 115 to 117 wherein the clamping is applied selectively to different extents to different regions, wherein the method further comprises:

comparing an average of pixel values determined at upsampled pixel locations within the region surrounding the upsampled pixel location with the mean of the input pixel values of the current frame within the region surrounding the upsampled pixel location; and

performing the clamping in dependence on a comparison of: (i) a difference between the average of pixel values determined at upsampled pixel locations within the region surrounding the upsampled pixel location and the mean of the input pixel values of the current frame within the region surrounding the upsampled pixel location, and (ii) a threshold difference.

119. The method of any of clauses 114 to 118 wherein in response to determining that the weights for all of the one or more identified pixels of the reference frame are zero, the pixel value for the upsampled pixel location is determined to be the determined mean of the input pixel values of the current frame within the region surrounding the upsampled pixel location.

120. The method of any of clauses 101 to 119 wherein the upsampled pixel locations are between the locations of diagonally adjacent input pixels of the current frame, such that the upsampled pixel locations and the locations of the input pixels form a repeating quincunx pattern.

121. The method of any of clauses 101 to 120 wherein the resolution of the pixels of the reference frame is the same as the resolution of input pixels of the current frame.

122. The method of clause 121 wherein a jitter pattern is used over the sequence of frames, such that different frames of the sequence have pixels at locations corresponding to different upsampled pixel locations.

123. The method of any of clauses 101 to 120 wherein the resolution of the pixels of the reference frame is the same as the resolution of the pixels determined at the upsampled pixel locations.

124. The method of any of clauses 101 to 123 wherein the pixel values and the depth values of the current frame and of the reference frame at input pixel locations are determined by a graphics rendering process.

125. The method of any of clauses 101 to 123 wherein said obtaining a depth value of the current frame for the upsampled pixel location comprises:

receiving depth values of the current frame at locations of input pixels surrounding the upsampled pixel location;

for each pair of input pixels of said input pixels for which depth values are received, determining an interpolated depth value for the upsampled pixel location based on the depth values for the pair of input pixels;

determining depth weights for said pairs of input pixels based on depth gradients between the depth values for the pairs of input pixels; and

determining the depth value of the current frame for the upsampled pixel location by performing a weighted sum of the determined interpolated depth values using the determined depth weights for the pairs of input pixels.

126. The method of clause 125 wherein said determining depth weights for said pairs of input pixels comprises:

multiplying the depth gradients for the pairs of input pixels by a negative number; and

inputting the results of the multiplications into a softmax function.

127. The method of any of clauses 101 to 126 wherein the pixel values are Y channel pixel values.

128. A processing module configured to determine one or more pixel values at a respective one or more upsampled pixel locations for a current frame of a sequence of frames, the processing module being configured to:

obtain depth values for locations of pixels of a reference frame of the sequence of frames; and

for each of the one or more upsampled pixel locations:

obtain a depth value of the current frame for the upsampled pixel location;

obtain a motion vector for the upsampled pixel location to indicate motion between the reference frame and the current frame for the upsampled pixel location;

use the motion vector for the upsampled pixel location to identify one or more of the pixels of the reference frame;

determine a weight for each of the one or more identified pixels of the reference frame in dependence on: (i) the depth value of the current frame for the upsampled pixel location, and (ii) the depth value for the location of the identified pixel of the reference frame; and

determine the pixel value for the upsampled pixel location using the determined weight for each of the one or more identified pixels.

129. A processing module configured to perform the method of any of clauses 101 to 127.

130. The processing module of clause 128 or 129 wherein the processing module is embodied in hardware on an integrated circuit.

131. Computer readable code configured to cause the method of any of clauses 101 to 127 to be performed when the code is run.

132. An integrated circuit definition dataset that, when processed in an integrated circuit manufacturing system, configures the integrated circuit manufacturing system to manufacture a processing module as specified in any of clauses 128 to 130.

201. A method of determining one or more pixel values at a respective one or more upsampled pixel locations for a current frame of a sequence of frames, the method comprising:

obtaining pixel values of pixels of a reference frame of the sequence of frames;

for each of the one or more upsampled pixel locations:

obtaining a plurality of input pixel values of the current frame for locations within a region surrounding the upsampled pixel location;

determining a mean of the input pixel values of the current frame within the region surrounding the upsampled pixel location;

obtaining a motion vector for the upsampled pixel location to indicate motion between the reference frame and the current frame for the upsampled pixel location;

using the motion vector for the upsampled pixel location to identify one or more of the pixels of the reference frame; and

combining the pixel values of the one or more identified pixels of the reference frame to determine a pixel value for the upsampled pixel location;

wherein said combining the pixel values of the one or more identified pixels of the reference frame to determine a pixel value for the upsampled pixel location comprises clamping the determined pixel value so that it does not differ from the determined mean of the input pixel values of the current frame within the region surrounding the upsampled pixel location by more than a threshold value.

202. The method of clause 201 further comprising, for each of the one or more upsampled pixel locations:

determining a standard deviation of the input pixel values of the current frame within the region surrounding the upsampled pixel location,
wherein the threshold value is based on the determined standard deviation of the input pixel values of the current frame within the region.

203. The method of clause 202 wherein for each of the one or more upsampled pixel locations, the threshold value is $F_{pixel} \cdot \sigma_{pixel}$, where $F_{pixel}$ is a predetermined factor, and $\sigma_{pixel}$ is the determined standard deviation of the input pixel values of the current frame within the region surrounding the upsampled pixel location.

204. The method of any of clauses 201 to 203 wherein the clamping is applied selectively to different extents to different regions.

205. The method of clause 204 wherein the method further comprises:

comparing an average of pixel values determined at upsampled pixel locations within the region surrounding the upsampled pixel location with the mean of the input pixel values of the current frame within the region surrounding the upsampled pixel location; and

performing the clamping in dependence on a comparison of: (i) a difference between the average of pixel values determined at upsampled pixel locations within the region surrounding the upsampled pixel location and the mean of the input pixel values of the current frame within the region surrounding the upsampled pixel location, and (ii) a threshold difference.

206. The method of any of clauses 201 to 205 wherein the pixel values are Y channel pixel values.

207. The method of any of clauses 201 to 206 wherein, for each of the one or more upsampled pixel locations, said combining the pixel values of the one or more identified pixels of the reference frame comprises:

determining a weight for each of the one or more identified pixels of the reference frame; and

determining the pixel value for the upsampled pixel location using the determined weight for each of the one or more identified pixels.

208. The method of clause 207 wherein said determining the pixel value for the upsampled pixel location comprises performing a weighted sum of the pixel values of the one or more identified pixels of the reference frame using the determined weight for each of the one or more identified pixels in the weighted sum.

209. The method of clause 207 or 208 further comprising, for each of the one or more upsampled pixel locations:

obtaining depth values for the locations of the one or more identified pixels of the reference frame; and

obtaining a depth value of the current frame for the upsampled pixel location,

wherein the weight for each of the one or more identified pixels of the reference frame is determined in dependence on: (i) the depth value of the current frame for the upsampled pixel location, and (ii) the depth value for the location of the identified pixel of the reference frame.

210. The method of clause 209 wherein for each of the one or more upsampled pixel locations, the weight for each of the one or more identified pixels of the reference frame is determined in dependence on a difference between the depth value of the current frame for the upsampled pixel location and the depth value for the location of the identified pixel of the reference frame.

211. The method of clause 209 or 210 further comprising, for each of the one or more upsampled pixel locations:

obtaining a plurality of depth values of the current frame for locations within a region surrounding the upsampled pixel location; and

determining a standard deviation of the depth values of the current frame within the region, wherein the weight for each of the identified pixels of the reference frame is determined further in dependence on: (iii) the determined standard deviation of the depth values.

212. The method of clause 211 when dependent upon clause 210, wherein said determining a weight for each of the one or more identified pixels of the reference frame comprises comparing the difference between the depth value of the current frame for the upsampled pixel location and the depth value for the location of the identified pixel of the reference frame with a depth threshold, wherein the depth threshold is based on the determined standard deviation of the depth values of the current frame within the region.

213. The method of clause 212 wherein the weight for an identified pixel of the reference image is determined to be lower in response to determining that the difference between the depth value of the current frame for the upsampled pixel location and the depth value for the location of the identified pixel of the reference frame is greater than the depth threshold.

214. The method of clause 213 wherein the depth threshold is a hard threshold, and wherein the weight, $w_k$, for an identified pixel, $k$, of the reference image is determined such that $w_k = w_{i,k} \cdot (|D_{ref,k} - D_{curr}| \leq T_d)$, where $T_d$ is the depth threshold, where $T_d = F_{depth} \cdot \sigma_{depth}$, and where $w_{i,k}$ is an initial weight for the identified pixel of the reference image, $D_{ref,k}$ is the depth value for the location of the identified pixel of the reference frame, $D_{curr}$ is the depth value of the current frame for the upsampled pixel location, $F_{depth}$ is a predetermined factor, and $\sigma_{depth}$ is the determined standard deviation of the depth values of the current frame within the region surrounding the upsampled pixel location.

215. The method of clause 213 wherein the depth threshold is a soft threshold, and wherein the weight, $w_k$, for an identified pixel, $k$, of the reference image is determined such $w_k = w_{i,k} \cdot e^{-\left(\frac{\left(D_{ref,k} - D_{curr}\right)}{T_d}\right)^2}$, where $T_d$ is the depth threshold, where $T_d = F_{depth} \cdot \sigma_{depth}$, and where $w_{i,k}$ is an initial weight for the identified pixel of the reference image, $D_{ref,k}$ is the depth value for the location of the identified pixel of the reference frame, $D_{curr}$ is the depth value of the current frame for the upsampled pixel location, $F_{depth}$ is a predetermined factor, and $\sigma_{depth}$ is the determined standard deviation of the depth values of the current frame within the region surrounding the upsampled pixel location.

216. The method of any of clauses 209 to 215 wherein said obtaining a depth value of the current frame for the upsampled pixel location comprises:

receiving depth values of the current frame at locations of input pixels surrounding the upsampled pixel location;

for each pair of input pixels of said input pixels for which depth values are received, determining an interpolated depth value for the upsampled pixel location based on the depth values for the pair of input pixels;

determining depth weights for said pairs of input pixels based on depth gradients between the depth values for the pairs of input pixels; and

determining the depth value of the current frame for the upsampled pixel location by performing a weighted sum of the determined interpolated depth values using the determined depth weights for the pairs of input pixels.

217. The method of clause 216 wherein said determining depth weights for said pairs of input pixels comprises:

multiplying the depth gradients for the pairs of input pixels by a negative number; and

inputting the results of the multiplications into a softmax function.

218. The method of any of clauses 207 to 217 wherein, in response to determining that the weights for all of the identified pixels of the reference frame are zero, the pixel value for the upsampled pixel location is determined to be the determined mean of the input pixel values of the current frame within the region surrounding the upsampled pixel location.

219. The method of any of clauses 207 to 218 wherein, for each of the one or more upsampled pixel locations, the weight for each of the one or more identified pixels of the reference frame is determined in dependence on an extent to which the identified pixel of the reference frame is an outlier compared to the other identified pixels of the reference frame.

220. The method of any of clauses 201 to 219 wherein said using the motion vector for the upsampled pixel location to identify one or more of the pixels of the reference frame comprises projecting the upsampled pixel location to a location in the reference frame based on the motion vector and identifying one or more of the pixels of the reference frame in the vicinity of the projected location in the reference frame.

221. The method of clause 220 when dependent upon clause 207 wherein, for each of the one or more upsampled pixel locations, said determining a weight for each of the one or more identified pixels of the reference frame comprises:

determining an initial weight by: (i) determining a distance between the projected location and the location of the identified pixel in the reference frame, and (ii) mapping the distance to an initial weight using a predetermined relationship; and

using the initial weight to determine the weight for the identified pixel of the reference frame.

222. The method of clause 221 wherein the predetermined relationship is a Gaussian relationship or a linear relationship.

223. The method of any of clauses 201 to 222 wherein the upsampled pixel locations are between the locations of diagonally adjacent input pixels of the current frame, such that the upsampled pixel locations and the locations of the input pixels form a repeating quincunx pattern.

224. The method of any of clauses 201 to 223 wherein the resolution of the pixels of the reference frame is the same as the resolution of input pixels of the current frame.

225. The method of clause 224 wherein a jitter pattern is used over the sequence of frames, such that different frames of the sequence have pixels at locations corresponding to different upsampled pixel locations.

226. The method of any of clauses 201 to 223 wherein the resolution of the pixels of the reference frame is the same as the resolution of the pixels determined at the upsampled pixel locations.

227. A processing module configured to determine one or more pixel values at a respective one or more upsampled pixel locations for a current frame of a sequence of frames, the processing module being configured to:

obtain pixel values of pixels of a reference frame of the sequence of frames;

for each of the one or more upsampled pixel locations:

obtain a plurality of input pixel values of the current frame for locations within a region surrounding the upsampled pixel location;

determine a mean of the input pixel values of the current frame within the region surrounding the upsampled pixel location;

obtain a motion vector for the upsampled pixel location to indicate motion between the reference frame and the current frame for the upsampled pixel location;

use the motion vector for the upsampled pixel location to identify one or more of the pixels of the reference frame; and

combine the pixel values of the one or more identified pixels of the reference frame to determine a pixel value for the upsampled pixel location;

wherein combining the pixel values of the one or more identified pixels of the reference frame to determine a pixel value for the upsampled pixel location comprises clamping the determined pixel value so that it does not differ from the determined mean of the input pixel values of the current frame within the region surrounding the upsampled pixel location by more than a threshold value.

228. A processing module configured to perform the method of any of clauses 201 to 226.

229. The processing module of clause 227 or 228 wherein the processing module is embodied in hardware on an integrated circuit.

230. Computer readable code configured to cause the method of any of clauses 201 to 226 to be performed when the code is run.

231. An integrated circuit definition dataset that, when processed in an integrated circuit manufacturing system, configures the integrated circuit manufacturing system to manufacture a processing module as specified in any of clauses 227 to 229.

301. A method of determining pixel values at upsampled pixel locations for a current frame of a sequence of frames, the method comprising:

determining pixel values at a first subset of the upsampled pixel locations for the current frame using a graphics rendering process;

determining pixel values at a second subset of the upsampled pixel locations for the current frame by applying temporal resampling to pixel values of pixels of a reference frame of the sequence of frames; and

determining pixel values at a third subset of the upsampled pixel locations for the current frame by applying spatial upsampling to the determined pixel values at the upsampled pixel locations of the first and second subsets.

302. The method of clause 301 wherein the upsampled pixel locations of the first and second subsets form a repeating quincunx pattern.

303. The method of clause 302 wherein the upsampled pixel locations of the second subset are between diagonally adjacent upsampled pixel locations of the first subset, such that:

for each of the upsampled pixel locations of the first subset which are not on the edge of the current frame the nearest four upsampled pixel locations of the repeating quincunx pattern are upsampled pixel locations of the second subset, and

for each of the upsampled pixel locations of the second subset which are not on the edge of the current frame the nearest four upsampled pixel locations of the repeating quincunx pattern are upsampled pixel locations of the first subset.

304. The method of clause 302 or 303 wherein the upsampled pixel locations of the third subset are in the gaps of the repeating quincunx pattern.

305. The method of clause 304 wherein each of the upsampled pixel locations of the third subset which are not on the edge of the current frame is either: (i) between two horizontally adjacent upsampled pixel locations of the first subset and between two vertically adjacent upsampled pixel locations of the second subset, or (ii) between two vertically adjacent upsampled pixel locations of the first subset and between two horizontally adjacent upsampled pixel locations of the second subset.

306. The method of any of clauses 301 to 305 wherein the first, second and third subsets of upsampled pixel locations are distinct, such that there are no upsampled pixel locations that belong to more than one of the first, second and third subsets.

307. The method of any of clauses 301 to 306 wherein all of the upsampled pixel locations for the current frame belong to one of the first, second and third subsets.

308. The method of any of clauses 301 to 307 wherein:

a quarter of the upsampled pixel locations for the current frame are in the first subset,

a quarter of the upsampled pixel locations for the current frame are in the second subset, and

half of the upsampled pixel locations for the current frame are in the third subset.

309. The method of any of clauses 301 to 308 wherein a jitter pattern is used over the sequence of frames such that pixel values are determined using a graphics rendering process at different upsampled pixel locations for different frames of the sequence of frames.

310. The method of any of clauses 301 to 309 wherein the subset of upsampled pixel locations for which pixel values are determined using a graphics rendering process alternates for successive frames of the sequence of frames between being the first subset of upsampled pixel locations and being the second subset of upsampled pixel locations.

311. The method of any of clauses 301 to 310 wherein the reference frame is a previous frame or a later frame relative to the current frame in the sequence of frames.

312. The method of any of clauses 301 to 311 wherein said graphics rendering process is a rasterisation process or a ray tracing process.

313. The method of any of clauses 301 to 312 wherein said determining pixel values at a second subset of the upsampled pixel locations for the current frame by applying temporal resampling to pixel values of pixels of a reference frame of the sequence of frames comprises:

obtaining the pixel values of pixels of the reference frame;

for each of the upsampled pixel locations of the second subset:

obtaining a motion vector for the upsampled pixel location to indicate motion between the reference frame and the current frame for the upsampled pixel location;

using the motion vector for the upsampled pixel location to identify one or more of the pixels of the reference frame; and

combining the pixel values of the one or more identified pixels of the reference frame to determine a pixel value for the upsampled pixel location of the second subset.

314. The method of clause 313 wherein said determining pixel values at a second subset of the upsampled pixel locations for the current frame by applying temporal resampling to pixel values of pixels of a reference frame of the sequence of frames further comprises:

obtaining depth values for the locations of the pixels of the reference frame; and

for each of the upsampled pixel locations of the second subset, obtaining a depth value of the current frame for the upsampled pixel location;

wherein, for each of the upsampled pixel locations of the second subset, said combining the pixel values of the one or more identified pixels of the reference frame comprises:

determining a weight for each of the one or more identified pixels of the reference frame in dependence on: (i) the depth value of the current frame for the upsampled pixel location, and (ii) the depth value for the location of the identified pixel of the reference frame; and

determining the pixel value for the upsampled pixel location using the determined weight for each of the identified pixels.

315. The method of clause 314 wherein said determining the pixel value for the upsampled pixel location comprises performing a weighted sum of the pixel values of the one or more identified pixels of the reference frame using the determined weight for each of the one or more identified pixels in the weighted sum.

316. The method of clause 314 or 315 further comprising, for each of the one or more upsampled pixel locations of the second subset:

obtaining a plurality of depth values of the current frame for locations within a region surrounding the upsampled pixel location; and

determining a standard deviation of the depth values of the current frame within the region, wherein the weight for each of the identified pixels of the reference frame is determined further in dependence on: (iii) the determined standard deviation of the depth values.

317. The method of any of clauses 313 to 316 wherein said using the motion vector for the upsampled pixel location to identify one or more of the pixels of the reference frame comprises projecting the upsampled pixel location to a location in the reference frame based on the motion vector and identifying one or more of the pixels of the reference frame in the vicinity of the projected location in the reference frame.

318. The method of any of clauses 313 to 317 wherein said determining pixel values at a second subset of the upsampled pixel locations for the current frame by applying temporal resampling to pixel values of pixels of a reference frame of the sequence of frames further comprises, for each of the one or more upsampled pixel locations of the second subset:

determining a mean of a plurality of the pixel values at the first subset of upsampled pixel locations for the current frame within a region surrounding the upsampled pixel location,

wherein said combining the pixel values of the one or more identified pixels of the reference frame to determine a pixel value for the upsampled pixel location of the second subset comprises clamping the determined pixel value so that it does not differ from the determined mean of the pixel values at the first subset of upsampled pixel locations for the current frame within the region surrounding the upsampled pixel location by more than a threshold value.

319. The method of clause 318 wherein said determining pixel values at a second subset of the upsampled pixel locations for the current frame by applying temporal resampling to pixel values of pixels of a reference frame of the sequence of frames further comprises, for each of the one or more upsampled pixel locations of the second subset:

determining a standard deviation of the plurality of the pixel values at the first subset of upsampled pixel locations for the current frame within the region surrounding the upsampled pixel location,

wherein the threshold value is based on the determined standard deviation of the pixel values at the first subset of upsampled pixel locations for the current frame within the region.

320. The method of any of clauses 301 to 319 wherein said determining pixel values at a third subset of the upsampled pixel locations for the current frame by applying spatial upsampling to the determined pixel values at the upsampled pixel locations of the first and second subsets comprises performing bilinear interpolation on determined pixel values at the upsampled pixel locations of the first and second subsets.

321. The method of any of clauses 301 to 319 wherein said determining pixel values at a third subset of the upsampled pixel locations for the current frame by applying spatial upsampling to the determined pixel values at the upsampled pixel locations of the first and second subsets comprises:

analysing the pixel values at the upsampled pixel locations of the first and second subsets to determine one or more weighting parameters, the one or more weighting parameters being indicative of a directionality of filtering to be applied when upsampling is applied to the determined pixel values at the upsampled pixel locations of the first and second subsets; and

determining the pixel values at the third subset of the upsampled pixel locations by applying one or more kernels to at least some of the pixel values at the upsampled pixel locations of the first and second subsets in accordance with the determined one or more weighting parameters.

322. The method of clause 321 wherein said analysing the pixel values at the upsampled pixel locations of the first and second subsets to determine one or more weighting parameters comprises processing the pixel values at the upsampled pixel locations of the first and second subsets with an implementation of a neural network, wherein the neural network has been trained to output an indication of the one or more weighting parameters to be indicative of a directionality of filtering to be applied when upsampling is applied to the determined pixel values at the upsampled pixel locations of the first and second subsets.

323. The method of clause 321 or 322 wherein the pixel values at the third subset of the upsampled pixel locations are non-sharpened upsampled pixel values.

324. The method of clause 321 or 322 wherein the pixel values at the third subset of the upsampled pixel locations are sharpened upsampled pixel values.

325. The method of any of clauses 301 to 324 wherein the pixel values are Y channel pixel values.

326. A processing system configured to determine pixel values at upsampled pixel locations for a current frame of a sequence of frames, the processing system comprising:

a graphics rendering unit configured to determine pixel values at a first subset of the upsampled pixel locations for the current frame using a graphics rendering process;

temporal resampling logic configured to determine pixel values at a second subset of the upsampled pixel locations for the current frame by applying temporal resampling to pixel values of pixels of a reference frame of the sequence of frames; and

spatial upsampling logic configured to determine pixel values at a third subset of the upsampled pixel locations for the current frame by applying spatial upsampling to the determined pixel values at the upsampled pixel locations of the first and second subsets.

327. The processing system of clause 326, wherein the processing system comprises a first device and a second device which are arranged to communicate with each other over a network,

wherein the graphics rendering unit and the temporal resampling logic are implemented at the first device, and

wherein the spatial upsampling logic is implemented at the second device.

328. A processing system configured to perform the method of any of clauses 301 to 325.

329. The processing system of any of clauses 326 to 328 wherein the processing system is embodied in hardware on one or more integrated circuits.

330. Computer readable code configured to cause the method of any of clauses 301 to 325 to be performed when the code is run.

331. An integrated circuit definition dataset that, when processed in an integrated circuit manufacturing system, configures the integrated circuit manufacturing system to manufacture a processing system as specified in any of clauses 326 to 329.

**Claims**

1. A method of determining one or more pixel values at a respective one or more upsampled pixel locations for a current frame of a sequence of frames, the method comprising:

   obtaining depth values for locations of pixels of a reference frame of the sequence of frames; and
   for each of the one or more upsampled pixel locations:

   obtaining a depth value of the current frame for the upsampled pixel location;
   obtaining a motion vector for the upsampled pixel location to indicate motion between the reference frame and the current frame for the upsampled pixel location;
   using the motion vector for the upsampled pixel location to identify one or more of the pixels of the reference frame;
   determining a weight for each of the one or more identified pixels of the reference frame in dependence on: (i) the depth value of the current frame for the upsampled pixel location, and (ii) the depth value for the location of the identified pixel of the reference frame; and
   determining the pixel value for the upsampled pixel location using the determined weight for each of the one or more identified pixels.

2. The method of claim 1 further comprising obtaining pixel values of the one or more identified pixels of the reference frame of the sequence of frames, wherein said determining the pixel value for the upsampled pixel location comprises performing a weighted sum of the pixel values of the one or more identified pixels of the reference frame using the determined weight for each of the one or more identified pixels in the weighted sum.

3. The method of claim 1 or 2 wherein for each of the one or more upsampled pixel locations, the weight for each of the one or more identified pixels of the reference frame is determined in dependence on a difference between the depth value of the current frame for the upsampled pixel location and the depth value for the location of the identified pixel of the reference frame.

4. The method of any preceding claim further comprising, for each of the one or more upsampled pixel locations:

   obtaining a plurality of depth values of the current frame for locations within a region surrounding the upsampled pixel location; and
   determining a standard deviation of the depth values of the current frame within the region, wherein the weight for each of the one or more identified pixels of the reference frame is determined further in dependence on: (iii) the determined standard deviation of the depth values.

5. The method of claim 4 when dependent upon claim 3, wherein said determining a weight for each of the one or more identified pixels of the reference frame comprises comparing the difference between the depth value of the current frame for the upsampled pixel location and the depth value for the location of the identified pixel of the reference frame with a depth threshold, wherein the depth threshold is based on the determined standard deviation of the depth values of the current frame within the region.

6. The method of claim 5 wherein the weight for an identified pixel of the reference image is determined to be lower in response to determining that the difference between the depth value of the current frame for the upsampled pixel location and the depth value for the location of the identified pixel of the reference frame is greater than the depth threshold.

7. The method of claim 6 wherein the depth threshold is either

   a hard threshold, and wherein the weight, $w_k$, for an identified pixel, k, of the reference image is determined such that $w_k = w_{i,k} \cdot (|D_{ref,k} - D_{curr}| \leq T_d)$, where $T_d$ is the depth threshold, where $T_d = F_{depth} \cdot \sigma_{depth}$, and where $w_{i,k}$ is an initial weight for the identified pixel of the reference image, $D_{ref,k}$ is the depth value for the location of the identified pixel of the reference frame, $D_{curr}$ is the depth value of the current frame for the upsampled pixel location, $F_{depth}$ is a predetermined factor, and $\sigma_{depth}$ is the determined standard deviation of the depth values of the current frame within the region surrounding the upsampled pixel location, or

   a soft threshold, and wherein the weight, $w_k$, for an identified pixel, k, of the reference image is determined such

   $$w_k = w_{i,k} \cdot e^{-\left(\frac{\left(D_{ref,k}-D_{curr}\right)}{T_d}\right)^2}$$ , where $T_d$ is the depth threshold, where $T_d = F_{depth} \cdot \sigma_{depth}$, and where $w_{i,k}$ is an initial weight for the identified pixel of the reference image, $D_{ref,k}$ is the depth value for the location of the identified pixel of the reference frame, $D_{curr}$ is the depth value of the current frame for the upsampled pixel location, $F_{depth}$ is a predetermined factor, and $\sigma_{depth}$ is the determined standard deviation of the depth values of the current frame within the region surrounding the upsampled pixel location.

8. The method of any preceding claim wherein said using the motion vector for the upsampled pixel location to identify one or more of the pixels of the reference frame comprises projecting the upsampled pixel location to a location in the reference frame based on the motion vector and identifying one or more of the pixels of the reference frame in the vicinity of the projected location in the reference frame.

9. The method of claim 8 wherein, for each of the one or more upsampled pixel locations, said determining a weight for each of the one or more identified pixels of the reference frame comprises determining an initial weight and using the initial weight to determine the weight for the identified pixel of the reference frame and wherein the initial weight for each of the one or more identified pixels of the reference frame is determined by:

   determining a distance between the projected location and the location of the identified pixel in the reference frame; and
   mapping the distance to an initial weight using a predetermined relationship.

10. The method of any preceding claim further comprising, for each of the one or more upsampled pixel locations:

    obtaining a plurality of input pixel values of the current frame for locations within a region surrounding the upsampled pixel location; and
    determining a mean of the input pixel values of the current frame within the region surrounding the upsampled pixel location,
    optionally wherein said determining the pixel value for the upsampled pixel location comprises clamping the determined pixel value so that it does not differ from the determined mean of the input pixel values of the current frame within the region surrounding the upsampled pixel location by more than a threshold value.

11. The method of claim 10 wherein in response to determining that the weights for all of the one or more identified pixels of the reference frame are zero, the pixel value for the upsampled pixel location is determined to be the determined mean of the input pixel values of the current frame within the region surrounding the upsampled pixel location.

12. The method of any preceding claim wherein said obtaining a depth value of the current frame for the upsampled pixel location comprises:

    receiving depth values of the current frame at locations of input pixels surrounding the upsampled pixel location;
    for each pair of input pixels of said input pixels for which depth values are received, determining an interpolated depth value for the upsampled pixel location based on the depth values for the pair of input pixels;
    determining depth weights for said pairs of input pixels based on depth gradients between the depth values for the pairs of input pixels; and
    determining the depth value of the current frame for the upsampled pixel location by performing a weighted sum of the determined interpolated depth values using the determined depth weights for the pairs of input pixels.

13. A processing module configured to determine one or more pixel values at a respective one or more upsampled pixel locations for a current frame of a sequence of frames, the processing module being configured to:

obtain depth values for locations of pixels of a reference frame of the sequence of frames; and
for each of the one or more upsampled pixel locations:

obtain a depth value of the current frame for the upsampled pixel location;
obtain a motion vector for the upsampled pixel location to indicate motion between the reference frame and the current frame for the upsampled pixel location;
use the motion vector for the upsampled pixel location to identify one or more of the pixels of the reference frame;
determine a weight for each of the one or more identified pixels of the reference frame in dependence on: (i) the depth value of the current frame for the upsampled pixel location, and (ii) the depth value for the location of the identified pixel of the reference frame; and
determine the pixel value for the upsampled pixel location using the determined weight for each of the one or more identified pixels.

14. Computer readable code configured to cause the method of any of claims 1 to 12 to be performed when the code is run.

15. A computer readable storage medium having stored thereon an integrated circuit definition dataset that, when processed in an integrated circuit manufacturing system, configures the integrated circuit manufacturing system to manufacture a processing module as claimed in claim 13.

102

Sequence of low
resolution
images

104

Processing
module

106

Sequence of high
resolution
images

**FIGURE 1**

204

212  210

202

Reference frame

Current frame

214

206

208

**FIGURE 2**

304

302

Sequence of frames

Processing module

310

Temporal resampling
logic

312

204  202  308

306

**FIGURE 3**

Obtain pixel values and depth values for pixels of a reference frame — S402

Obtain pixel values and depth values for the current frame — S404

Determine one or more moments for locations of the current frame in a region surrounding an upsampled pixel location — S406

Obtain a motion vector for the upsampled pixel location — S408

Use the motion vector for the upsampled pixel location to identify a plurality of the pixels of the reference frame — S410

Determine a weight for each of the identified pixels of the reference frame — S412

— S411

Determine the pixel value for the upsampled pixel location using the determined weights — S414

Is there another upsampled pixel location? — S416

Yes

No

Next upsampled pixel location

Output the determined pixel values — S418

**FIGURE 4**

**FIGURE 5**

**FIGURE 6**

**FIGURE 7**

FIGURE 8

Ground truth     with history rectification     without history rectification

$910_{GT}$   $902$   $908_{GT}$    $910_{HR}$   $904$   $908_{HR}$    $910_{NHR}$   $906$   $908_{NHR}$

FIGURE 9

FIGURE 10

FIGURE 11A

EP 4 575 977 A1

Receive depth values of the current frame at locations of input pixels surrounding the upsampled pixel location  ~ S1102

Determine a respective interpolated depth value for the upsampled pixel location based on depth values for each pair of the input pixels  ~ S1104

Determine depth weights for the pairs of input pixels based on depth gradients between the depth values for the pairs of input pixels  ~ S1106

Determine the depth value of the current frame for the upsampled pixel location by performing a weighted sum of the interpolated depth values using the depth weights for the pairs of input pixels  ~ S1108

## FIGURE 11B

1202

Processing system

| Graphics rendering unit | Temporal resampling logic | Spatial upsampling logic |

1204　　　　　　　　1206　　　　　　　　1208

**FIGURE 12**

Determine pixel values at a first subset of the upsampled pixel locations for the current frame using a graphics rendering process ⟶ S1302

Determine pixel values at a second subset of the upsampled pixel locations for the current frame by applying temporal resampling to pixel values of pixels of a reference frame of the sequence of frames ⟶ S1304

Determine pixel values at a third subset of the upsampled pixel locations for the current frame by applying spatial upsampling to the determined pixel values at the upsampled pixel locations of the first and second subsets ⟶ S1306

Output the determined pixel values for the current frame ⟶ S1308

**FIGURE 13**

**FIGURE 14**

1208

1410

1510

Spatial upsampling logic

1506

Pixel determination
logic

1504

Weighting parameter
determination logic

1508

**FIGURE 15**

| Receive pixel values at the upsampled pixel locations of the first and second subsets | S1602 |

| Analyse the input pixel values to determine one or more weighting parameters | S1604 |

| Determine one or more of the upsampled pixel values at the upsampled pixel locations of the third subset in accordance with the weighting parameter(s) | S1606 |

| Output the upsampled pixel values | S1608 |

**FIGURE 16**

S1606        From S1604

Apply one or more first kernels to a first subgroup of the pixel values to determine a horizontal component

S1702

Apply one or more second kernels to a second subgroup of the pixel values to determine a vertical component

S1704

Multiply the horizontal component by a first weighting parameter to determine a weighted horizontal component

S1706

Multiply the vertical component by a second weighting parameter to determine a weighted vertical component

S1708

Sum the weighted horizontal component and the weighted vertical component

S1710

To S1608

**FIGURE 17**

$1804_{2,1}$  $1804_{1,1}$  $1804_{2,2}$

1802

TR

$1804_{1,2}$

BL

$1804_{2,3}$

1806

$1804_{1,4}$

$1804_{1,3}$  $1804_{2,4}$

**FIGURE 18**

1902

| | | |
|---|---|---|
| a/2 | | a/2 |
| | | |

**FIGURE 19a**

1904

| | b/2 | |
|---|---|---|
| | | |
| | b/2 | |

**FIGURE 19b**

**FIGURE 20**

**FIGURE 21**

2202       2204

**CPU**

**GPU**

2210

2214

Display — 2216

Speakers — 2218

Camera — 2222

2220

2206 — **Memory**

**NNA**

2208

**FIGURE 22**

2302

2304       2306

IC definition dataset → **Layout processing** → Circuit layout definition → **Integrated circuit generation** → Integrated circuit

**FIGURE 23**

Europäisches
Patentamt
European
Patent Office
Office européen
des brevets

# EUROPEAN SEARCH REPORT

**Application Number**

EP 24 22 0689

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/138718 A1 (PANTELEEV ALEXEY [US] ET AL) 4 May 2023 (2023-05-04)<br>* paragraph [0055] - paragraph [0060] *<br>* paragraph [0064] - paragraph [0066] *<br>* paragraph [0070] *<br>* paragraph [0182] * | 1-3,8-15 | INV.<br>G06T3/4053<br>G06T7/20 |
| X | US 2023/298133 A1 (TOVEY STEVEN [GB] ET AL) 21 September 2023 (2023-09-21)<br>* paragraph [0057] - paragraph [0063] *<br>* paragraph [0071] - paragraph [0077] *<br>* paragraph [0084] - paragraph [0094] * | 1,13-15 | |
| A | US 2023/298212 A1 (TOVEY STEVEN [GB] ET AL) 21 September 2023 (2023-09-21)<br>* paragraph [0071] - paragraph [0073] *<br>* paragraph [0088] * | 1-15 | |

**TECHNICAL FIELDS SEARCHED (IPC)**

G06T

The present search report has been drawn up for all claims

| Place of search | Date of completion of the search | Examiner |
|---|---|---|
| The Hague | 13 March 2025 | Rajadell Rojas, Olga |

## ANNEX TO THE EUROPEAN SEARCH REPORT
## ON EUROPEAN PATENT APPLICATION NO.

EP 24 22 0689

This annex lists the patent family members relating to the patent documents cited in the above-mentioned European search report.
The members are as contained in the European Patent Office EDP file on
The European Patent Office is in no way liable for these particulars which are merely given for the purpose of information.

13-03-2025

| Patent document cited in search report | Publication date | Patent family member(s) | | Publication date |
|---|---|---|---|---|
| US 2023138718 A1 | 04-05-2023 | NONE | | |
| US 2023298133 A1 | 21-09-2023 | CN | 119301630 A | 10-01-2025 |
| | | EP | 4494087 A1 | 22-01-2025 |
| | | KR | 20240163125 A | 18-11-2024 |
| | | US | 2023298133 A1 | 21-09-2023 |
| | | WO | 2023177887 A1 | 21-09-2023 |
| US 2023298212 A1 | 21-09-2023 | CN | 119053986 A | 29-11-2024 |
| | | EP | 4494088 A1 | 22-01-2025 |
| | | KR | 20240169001 A | 02-12-2024 |
| | | US | 2023298212 A1 | 21-09-2023 |
| | | WO | 2023177888 A1 | 21-09-2023 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2319652 A